(19) Europäisches Patentamt / European Patent Office / Office européen des brevets

(11) **EP 4 000 840 B1**

(12) **EUROPEAN PATENT SPECIFICATION**

(45) Date of publication and mention
of the grant of the patent:
**11.03.2026 Bulletin 2026/11**

(21) Application number: **20842945.6**

(22) Date of filing: **05.06.2020**

(51) International Patent Classification (IPC):
**B29B 11/12** *(2006.01)*     **C08F 6/22** *(2006.01)*
**C08F 20/10** *(2006.01)*     **C08L 33/08** *(2006.01)*
**B29C 43/36** *(2006.01)*

(52) Cooperative Patent Classification (CPC):
(C-Sets available)
**C08L 13/00; C08C 1/15; C08F 2/26; C08F 6/008;
C08F 6/22; C08F 220/1802; C08F 220/1804**

(Cont.)

(86) International application number:
**PCT/JP2020/022316**

(87) International publication number:
**WO 2021/014793 (28.01.2021 Gazette 2021/04)**

(54) **ACRYLIC RUBBER BALE EXCELLENT IN STRENGTH PROPERTIES AND PROCESSABILITY**

ACRYLKAUTSCHUKBALLEN MIT ÜBERLEGENEN FESTIGKEITSEIGENSCHAFTEN UND
BEARBEITBARKEIT

VOILE DE CAOUTCHOUC ACRYLIQUE EXCELLENT EN TERMES DE CARACTÉRISTIQUES DE
RÉSISTANCE ET D'USINABILITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.07.2019 JP 2019134160**

(43) Date of publication of application:
**25.05.2022 Bulletin 2022/21**

(73) Proprietor: **Zeon Corporation
Tokyo 100-8246 (JP)**

(72) Inventors:
• **MASUDA, Hirofumi
Tokyo 100-8246 (JP)**
• **KAWANAKA, Takafumi
Tokyo 100-8246 (JP)**

(74) Representative: **Maiwald GmbH
Elisenhof
Elisenstraße 3
80335 München (DE)**

(56) References cited:
WO-A1-2018/079704     WO-A1-2018/079785
WO-A1-2018/147142     WO-A1-2019/087876
JP-A- 2004 131 654     JP-A- H11 199 743

(52) Cooperative Patent Classification (CPC): (Cont.)

C-Sets
**C08F 6/008, C08L 33/08;**
**C08F 6/22, C08L 33/08;**
**C08F 220/1802, C08F 220/1804, C08F 220/281,**
**C08F 222/16;**
**C08F 220/1804, C08F 220/1802, C08F 220/281,**
**C08F 220/44, C08F 216/1416;**
**C08F 220/1804, C08F 220/1802, C08F 220/281,**
**C08F 222/16;**
**C08F 220/1804, C08F 220/1802, C08F 222/16**

**Description**

[FIELD OF THE INVENTION]

The present invention relates to an acrylic rubber bale, and method for producing the same, a rubber mixture, and a method for producing the same, and a rubber cross-linked product, more specifically, an acrylic rubber bale excellent in strength properties and processability, a method for producing the same, a rubber mixture obtained by mixing the acrylic rubber bale, and a method for producing the rubber mixture, and a rubber cross-linked product obtained by cross-linking the rubber mixture.

Acrylic rubber is a polymer mainly composed of acrylic acid ester and is generally known as rubber excellent in heat resistance, oil resistance, and ozone resistance, and is widely used in fields related to automobiles.

Such acrylic rubber is usually commercialized by emulsion-polymerizing the monomer components constituting the acrylic rubber, bringing the obtained emulsion polymerization liquid into contact with a coagulant, drying the resulting hydrous crumbs, and thereafter baling the dried crumbs.

For example, Patent Document 1 (Japanese patent application publication 2006-328239) discloses a method for producing a rubber polymer comprising: a process to obtain a crumb slurry containing a crumb-shaped rubber polymer by bringing a polymer latex into contact with a coagulant liquid; a process to crush the crumb-shaped rubber polymer contained in the crumb slurry by a mixer having a stirring and crushing function with a stirring power of 1 kW/m$^3$ or greater; a dehydration process to obtain crumb-shaped rubber polymer by removing water from the crumb slurry obtained by crushing the crumb-shaped rubber polymer; and a process to heat and dry the crumb-shaped rubber polymer from which water has been removed, wherein the dried crumb is introduced into a baler in a form of flakes and compressed into bales. Further Patent Document 1 describes that the maximum width of the crumbs is preferably adjusted to about 3 to 20 mm when the crumbs are crushed by the mixer having a stirring and crushing function. An unsaturated nitrile-conjugated diene copolymer latex obtained by emulsion polymerization is specifically shown as a rubber polymer to be used here, and it is shown to be applicable to polymers composed only of acrylates such as ethyl acrylate / n-butyl acrylate copolymer, ethyl acrylate / n-butyl acrylate / 2-methoxyethyl acrylate copolymer. However, there is a problem that the acrylic rubber composed of only acrylate is inferior in cross-linked rubber properties such as strength properties, heat resistance and compression set resistance.

As the acrylic rubber having a reactive group excellent in the strength properties and heat resistance for example, Patent Document 2 (International Publication WO 2018/116828 Pamphlet) discloses a method in which a monomer component consisting of ethyl acrylate, n-butyl acrylate and mono-n-butyl fumarate is emulsified with sodium lauryl sulfate as emulsifier, polyethylene glycol monostearate and water, emulsion polymerization is performed in the presence of a polymerization initiator until the polymerization conversion rate reaches 95% to obtain acrylic rubber latex, and add the acrylic rubber latex to an aqueous solution of magnesium sulfate and dimethylamine-ammonia-epichlorohydrin polycondensate which is a polymer flocculant, and thereafter the mixture is stirred at 85°C to form a crumb slurry, and then after once washing the slurry with water, the entire amount thereof is passed through a 100-mesh wire net to capture only the solid content, thereby to collect crumb-shaped acrylic rubber. Patent Document 2 describes that, according to this method, the obtained crumbs in a hydrous state are dehydrated by centrifugation or the like, dried at 50 to 120°C by a band dryer or the like, and introduced into a baler to be compressed and baled. However, in such a method, there are a problem that a large amount of semi-coagulated hydrous crumbs is generated in the coagulation reaction so that the generated crumbs adhere to the coagulation tank, a problem that the coagulant and the emulsifier cannot be sufficiently removed by washing, and a problem that water resistance and processability in Banbury and the like are poor.

Regarding the gel amount of the acrylic rubber, for example, Patent Document 3 (Japanese Patent Publication 3599962) discloses an acrylic rubber having 5% by weight or less a gel fraction insoluble in acetone, obtained by copolymerizing 95 to 99.9% by weight of an alkyl acrylate or alkoxyalkyl acrylate and 0.1 to 5% by weight of a polymerizable monomer having two or more radically reactive unsaturated groups having different reactivity, in the presence of a radical polymerization initiator, and an acrylic rubber composition composed of reinforcing filler and organic peroxide vulcanizing agent, excellent in extrusion processability such as extrusion speed, die swell and surface texture. The acrylic rubber used here having a very low gel fraction is obtained by adjusting the PH of the polymerization liquid to 6 to 8 with sodium hydrogen carbonate or the like with respect to the acrylic rubber with a high gel fraction (60%) obtained in the normal acidic region (pH4 before polymerization, pH3.4 after polymerization). To be specific, water and an emulsifier composed of sodium lauryl sulfate, polyoxyethylene nonylphenyl ether, sodium carbonate and boric acid are charged and adjusted to 75°C, then t-butyl hydroperoxide, rongalite, ethylenediaminetetraacetic acid disodium salt, and ferrous sulfate were added (pH at this time was 7.1), and thereafter the monomer components of ethyl acrylate and allyl methacrylate were added dropwise to perform emulsion polymerization, and the obtained emulsion (pH7) was salted out using an aqueous sodium sulfate solution, then washed and dried to obtain an acrylic rubber. However, there is a problem that the acrylic rubber containing a (meth) acrylic acid ester as a main component decomposes in a neutral to alkaline region, so that storage stability and strength properties are inferior even if processability is improved.

Further, Patent Document 4 (International Publication WO 2018/143101 Pamphlet) discloses a technology in which a (meth) acrylic acid ester and an ion-crosslinkable monomer are emulsion-polymerized, an acrylic rubber which has a complex viscosity ([η] 100°C) at 100°C of 3,500 Pa·s or less, and a ratio ([η] 100°C / [η] 60°C) of the complex viscosity ([η] 60°C) at 60°C to the complex viscosity ([η] 100°C) at 100°C of 0.8 or less, is used, so that the extrusion moldability of a rubber composition containing a reinforcing agent and a cross-linking agent, in particular, the discharge amount, discharge length and surface texture are enhanced. Further, it is described that the gel amount, which is tetrahydrofuran (THF) insoluble content of the acrylic rubber used in the same technology is 80% by weight or less, preferably 5 to 80% by weight, and preferably exists as much as possible in the range of 70% by weight or less, and when the gel amount is less than 5% by weight, the extrudability deteriorates. Furthermore, it is described that the weight average molecular weight (Mw) of the acrylic rubber used is 200,000 to 1,000,000, and when the weight average molecular weight (Mw) exceeds 1,000,000, the viscoelasticity of the acrylic rubber becomes high, which is not preferable. However, the Patent Document 4 does not describe a method for improving the processability of the acrylic rubber having high molecular weight and high strength by using Banbury or the like. Patent Document 5 discloses a method for producing an acrylic rubber using emulsion polymerization, however, no extrusion step following a baling process is disclosed.

[CITATION LIST]

[PATENT LITERATURE]

> [Patent Document 1] Japanese Patent Application Publication 2006-328239
> [Patent Document 2] International Publication WO 2018/116828 Pamphlet
> [Patent Document 3] Japanese Patent Publication 3599962
> [Patent Document 4] International Publication WO 2018/143101 Pamphlet
> [Patent Document 5] International Publication WO 2019/087876 A1

[SUMMARY OF THE INVENTION]

[TECHNICAL PROBLEM]

The present invention has been made in consideration of such actual situation, and the present invention is aimed to provide an acrylic rubber bale excellent in strength properties and processability during kneading by Banbury mixer or the like, a method for producing the same, a rubber mixture containing an acrylic rubber bale, a method for producing the rubber mixture, and a rubber cross-linked product of the same.

[MEANS TO SOLVE THE PROBLEM]

As a result of diligent studies conducted by the present inventors in view of the above problems, the present inventors have found out that an acrylic rubber bale mainly containing a (meth) acrylic acid ester and having a specific molecular weight, a specific molecular weight distribution in high molecular weight region, and a specific gel amount insoluble in methyl ethyl ketone has a high strength and is excellent in processability such as a Banbury or the like. Further, the present inventors have found out that strength properties and processability of an acrylic rubber bale are further highly well-balanced by specifying a complex viscosity at a specific temperature, a specific gravity, a specific pH, and a specific water content.

The present inventors have also found out that an acrylic rubber bale, produced by emulsion-polymerizing a monomer component mainly containing a (meth) acrylic acid ester to a specific polymerization conversion rate or higher and washing the hydrous crumbs generated in a coagulation process, followed by drying to a specific water content with a screw-type extruder and baling, can highly improve the processability without impairing the strength properties.

Further, the inventors of the present invention have found out that the amount of gel insoluble in methyl ethyl ketone of acrylic rubber is very difficult to control in the production process, and the amount of gel insoluble in methyl ethyl ketone of the acrylic rubber bale produced greatly varies and the optimum kneading time such as Banbury kneading varies, so that the physical properties of the rubber mixture and the rubber cross-linked product are impaired. The inventors of the present invention have found out that, in the present invention, in particular, when emulsion polymerization is performed up to a certain degree or more of polymerization conversion ratio in order to improve the strength properties, the amount of gel insoluble in methyl ethyl ketone in the acrylic rubber rapidly increases so that the processability deteriorates, but by using a screw-type extruder to dry the acrylic rubber to a specific water content and melt and knead in a state of containing substantially no water, the amount of gel insoluble in methyl ethyl ketone that has rapidly increased is eliminated, so that the processability of the acrylic rubber bale produced is highly improved and is stabilized with little variation.

In addition, the present inventors have found out that the gel in acrylic rubber behaves quite differently depending on the solvent used, for example, there is no correlation between the amount of gel insoluble in tetrahydrofuran and the amount of gel insoluble in methyl ethyl ketone, and also, the properties given to the acrylic rubber are different.

Further, the inventors of the present invention have found out that water resistance can be improved, and storage stability can be improved so that processability variation is reduced, as well as ash content in the acrylic rubber bale can be reduced by providing a dehydration process to squeeze out water from the hydrous crumbs.

The present inventors have found out that although it is difficult to dry acrylic rubber with a large specific heat to a specific water content in a screw type extruder, an acrylic rubber bale that having excellent strength properties and processability can be stably produced by specifying temperature of the hydrous crumbs to be charged, water content after dehydration, temperature and degree of pressure reduction of the drying barrel section, and ratio of extrusion rate and rotation speed. In particular, it has been found out that the ratio of the extrusion rate and the rotation speed of a screw-type extruder is relatively large, and under these conditions, an acrylic rubber bale having excellent strength properties and processability can be produced with good productivity.

The present inventors have further found out that an acrylic rubber bale having a large specific gravity with little air with excellent storage stability as well as an improved processability variation can be produced, by specifying a resin pressure of the die portion of the screw-type extruder, making the dry rubber to be extruded in a sheet shape, and laminating the sheet-shaped dry rubber to be baled.

The present inventors have completed the present invention based on these findings.

Thus, according to the present invention, there is provided an acrylic rubber bale, comprising an acrylic rubber mainly containing a (meth) acrylic acid ester having a weight average molecular weight (Mw) of 1,000,000 to 5,000,000 and a ratio (Mz/Mw) of a Z-average molecular weight (Mz) and a weight average molecular weight (Mw) is 1.3 or more, wherein an amount of gel insoluble in methyl ethyl ketone is 50% by weight or less.

In the acrylic rubber bale of the present invention, the amount of gel insoluble in methyl ethyl ketone is preferably 20% by weight or less.

In the acrylic rubber bale of the present invention, it is preferable that all of 20 values of the amount of gel insoluble in methyl ethyl ketone of the acrylic rubber bale measured at arbitrary 20 points fall within the range of (average value -5) to (average value +5) % by weight. Here, the "range of (average value - 5) to (average value + 5) % by weight" means, for example, when the average value of the amount of gel insoluble in the methyl ethyl ketone measured is 20% by weight, the range is 15 to 25% by weight. In this specification, the range is written as "range of average value $\pm 5$". The range may or may not include the lower limit. Similarly, the range may or may not include the upper limit.

In the acrylic rubber bale of the present invention, a complex viscosity ($[\eta] 60°C$) at 60°C is preferably 15,000 Pa·s or less.

In the acrylic rubber bale of the present invention, a ratio ($[\eta] 100°C / [\eta] 60°C$) of a complex viscosity ($[\eta] 100°C$) at 100°C to a complex viscosity ($[\eta] 60°C$) at 60°C is preferably 0.5 or more.

In the acrylic rubber bale of the present invention, a ratio ($[\eta] 100°C / [\eta] 60°C$) of a complex viscosity ($[\eta] 100°C$) at 100°C to a complex viscosity ($[\eta] 60°C$) at 60°C is more preferably 0.8 or more.

In the acrylic rubber of the present invention, a specific gravity is preferably in the range of 0.7 to 1.5.

In the acrylic rubber bale of the present invention, a specific gravity is more preferably in the range of 0.8 to 1.4.

In the acrylic rubber bale of the present invention, a pH is preferably 6 or less.

In the acrylic rubber bale of the present invention, an ash content is preferably 0.3% by weight or less.

In the acrylic rubber bale of the present invention, a content of at least one element selected from the group consisting of sodium, sulfur, calcium, magnesium, and phosphorus in an ash is preferably 70% by weight or more.

In the acrylic rubber bale of the present invention, a water content is preferably less than 1% by weight.

In the acrylic rubber bale of the present invention, a Mooney viscosity (ML1+4,100°C) of the acrylic rubber bale is preferably in the range of 10 to 150.

According to the present invention, there is provided a method for producing an acrylic rubber bale as defined herein, the method comprising: an emulsion polymerization process to emulsify a monomer component mainly composed of a (meth) acrylic acid ester with water and an emulsifier, and to emulsion-polymerize the emulsified monomer component in the presence of a polymerization catalyst to a polymerization conversion rate of 90% by weight or more to obtain an emulsion polymerization liquid; a coagulation process to contact the obtained emulsion polymerization liquid with a coagulant liquid to generate hydrous crumbs; a washing process to wash the generated hydrous crumbs; a drying process to dry the washed hydrous crumbs to a water content of less than 1% by weight and then extrude the dry rubber; and a baling process to bale the extruded dry rubber, wherein the drying process is performed by using a screw-type extruder.

Further, according to the present invention, there is provided a method for producing an acrylic rubber bale, which is any acrylic rubber bale described above.

Further, according to the present invention, a dehydration process to squeeze out water from the hydrous crumbs is further provided.

Further, according to the present invention, there is provided a method for producing an acrylic rubber bale, wherein hydrous crumbs are dehydrated to a water content of 1 to 40% by weight.

In the method for producing an acrylic rubber bale of the present invention, the dehydration process and the drying process is preferably performed by using a screw-type extruder provided with a dehydration barrel having a dehydration slit, a drying barrel under reduced pressure, and a die at the tip, to dehydrate the hydrous crumbs in the dehydration barrel to a water content to 1 to 40% by weight, and thereafter to dry the hydrous crumbs in the drying barrel to a water content of less than 1% by weight, and then to extrude a dry rubber from the die.

In the method for producing an acrylic rubber bale of the present invention, it is preferable that a temperature of the hydrous crumbs charged into the screw-type extruder is 40°C or higher.

In the method of producing an acrylic rubber of the present invention, a temperature of a drying barrel section of the screw-type extruder is preferably in the range of 100 to 250°C.

In the method of producing an acrylic rubber of the present invention, a degree of pressure reduction of a drying barrel section of the screw-type extruder is preferably in the range of 1 to 50 kPa.

In the method of producing an acrylic rubber of the present invention, a resin pressure of a die portion of the screw-type extruder is preferably in the range of 0.1 to 10 MPa.

In the method for producing an acrylic rubber bale of the present invention, it is preferable that a ratio (Q/N) of an extrusion rate (Q) and a number of revolutions of the screw-type extruder is in the range of 1 to 20.

In the method of producing an acrylic rubber of the present invention, the dry rubber is preferably sheet-shaped.

In the method of producing an acrylic rubber of the present invention, baling of the dry rubber is preferably laminating the sheet-shaped dry rubber.

According to the present invention, a rubber mixture obtained by mixing a filler and a cross-linking agent with the above-mentioned acrylic rubber bale is provided.

According to the present invention, there is provided a method for producing a rubber mixture characterized by that any of the above acrylic rubber bale is mixed with a filler and a cross-linking agent using a mixer.

According to the present invention, there is provided a method for producing a rubber mixture in which any of the above acrylic rubber bale is mixed with a filler and then a crosslinking agent is mixed.

Furthermore, according to the present invention, a rubber cross-linked product obtained by cross-linking the above-mentioned rubber mixture is provided.

[EFFECT OF THE INVENTION]

According to the present invention, an acrylic rubber bale excellent in strength properties and processability, a method for producing the same, a rubber mixture obtained by mixing the acrylic rubber bale, and a method for producing the rubber mixture, and a rubber cross-linked product obtained by cross-linking the rubber mixture are provided.

[BRIEF DESCRIPTION OF THE DRAWINGS]

FIG. 1 is a diagram schematically showing an example of an acrylic rubber production system used for producing an acrylic rubber bale according to an embodiment of the present invention.
FIG. 2 is a diagram showing a configuration of the screw-type extruder of FIG. 1.
FIG. 3 is a diagram showing a configuration of a carrier-type cooling device used as the cooling device of FIG. 1.

[DETAILED DESCRIPTION OF EMBODIMENTS]

The acrylic rubber bale of the present invention comprises an acrylic rubber mainly containing a (meth) acrylic acid ester having a weight average molecular weight (Mw) of 1,000,000 to 5,000,000 and a ratio (Mz/Mw) of a Z-average molecular weight (Mz) and a weight average molecular weight (Mw) is 1.3 or more, wherein an amount of gel insoluble in a methyl ethyl ketone is 50% by weight or less.

<Monomer Component>

The acrylic rubber constituting the acrylic rubber bale of the present invention is mainly containing a (meth) acrylic acid ester. A proportion of the (meth) acrylic acid ester in the acrylic rubber is appropriately selected according to purpose of use, but it is usually 50% by weight or more, preferably 70% by weight or more, more preferably 80% by weight or more. It should be noted that in this invention, "(meth) acrylic acid ester" is used as a general term for esters of acrylic acid and/or methacrylic acid.

The acrylic rubber constituting the acrylic rubber bale of the present invention preferably contains at least one (meth) acrylic acid ester selected from the group consisting of (meth) acrylic acid alkyl ester and (meth) acrylic acid alkoxyalkyl ester, since it can highly improve cross-linking properties of the acrylic rubber bale.

The acrylic rubber constituting the acrylic rubber bale of the present invention preferably contains a monomer containing a reactive group, since it can highly improve heat resistance, compression set resistance properties, and the like of the acrylic rubber bale.

Preferable examples of the acrylic rubber constituting the acrylic rubber bale of the present invention include an acrylic rubber composed of at least one (meth) acrylic acid ester selected from the group consisting of (meth) acrylic acid alkyl ester and (meth) acrylic acid alkoxyalkyl ester, a monomer containing a reactive group, and other copolymerizable monomers as necessary.

The (meth) acrylic acid alkyl ester is not particularly limited, but it is usually a (meth) acrylic acid alkyl ester having an alkyl group having 1 to 12 carbon atoms, preferably a (meth) acrylic acid alkyl ester having an alkyl group having 1 to 8 carbon atoms, more preferably a (meth) acrylic acid alkyl ester having an alkyl group having 2 to 6 carbon atoms.

Specific examples of the alkyl (meth) acrylate include methyl (meth) acrylate, ethyl (meth) acrylate, n-propyl (meth) acrylate, isopropyl (meth) acrylate, and n-butyl (meth) acrylate, isobutyl (meth) acrylate, n-hexyl (meth) acrylate, 2-ethylhexyl (meth) acrylate, cyclohexyl (meth) acrylate, and the like, preferably ethyl (meth) acrylate, n-butyl (meth) acrylate, and more preferably ethyl acrylate and n-butyl acrylate.

The (meth) acrylic acid alkoxyalkyl ester is not particularly limited, but it is usually a (meth) acrylic acid alkoxyalkyl ester having an alkoxyalkyl group having 2 to 12 carbon atoms, preferably a (meth) acrylic acid alkoxyalkyl ester having an alkoxyalkyl group having 2 to 8 carbon atoms, more preferably a (meth) acrylic acid alkoxyalkyl ester having an alkoxyalkyl group having 2 to 6 carbon atoms.

Specific examples of the (meth) acrylic acid alkoxyalkyl ester include methoxymethyl (meth) acrylate, methoxyethyl (meth) acrylate, methoxypropyl (meth) acrylate, methoxy butyl (meth) acrylate, ethoxymethyl (meth) acrylate, ethoxyethyl (meth) acrylate, propoxyethyl (meth) acrylate, butoxyethyl (meth) acrylate, and the like. Among these, methoxyethyl (meth) acrylate, ethoxyethyl (meth) acrylate and the like are preferable, and methoxyethyl acrylate and ethoxyethyl acrylate are more preferable.

At least one of (meth) acrylic acid ester selected from the group consisting of these (meth) acrylic acid alkyl esters and (meth) acrylic acid alkoxyalkyl esters may be used alone or in combination of two or more, the ratio of the (meth) acrylic acid ester in the acrylic rubber is usually 50 to 99.99% by weight, preferably 70 to 99.9% by weight, more preferably 80 to 99.5% by weight, and most preferably 87 to 99% by weight. If the amount of (meth) acrylic acid ester in the monomer component is excessively small, the weather resistance, heat resistance, and oil resistance of the resulting acrylic rubber may decrease, which is not preferable.

The monomer containing a reactive group is not particularly limited and may be appropriately selected according to purpose of use, but a monomer having at least one functional group selected from the group consisting of a carboxyl group, an epoxy group and a halogen group is preferable, a monomer having at least one functional group selected from the group consisting of a carboxyl group, an epoxy group and a chlorine atom is more preferable, and a monomer having an ion cross-linking group such as a carboxyl group and an epoxy group is particularly preferable, and a monomer having a carboxyl group is most preferable.

The monomer having a carboxyl group is not particularly limited, but ethylenically unsaturated carboxylic acid can be preferably used. Examples of the ethylenically unsaturated carboxylic acid include, for example, ethylenically unsaturated monocarboxylic acid, ethylenically unsaturated dicarboxylic acid, ethylenically unsaturated dicarboxylic acid monoester, and the like, and among these, ethylenically unsaturated dicarboxylic acid monoester is particularly preferable, since the said monoester can further improve the compression set resistance property when the acrylic rubber is a rubber cross-linked product.

The ethylenically unsaturated monocarboxylic acid is not particularly limited, but an ethylenically unsaturated monocarboxylic acid having 3 to 12 carbon atoms is preferable, and examples thereof include acrylic acid, methacrylic acid, α-ethylacrylic acid, crotonic acid, and cinnamic acid.

The ethylenically unsaturated dicarboxylic acid is not particularly limited, but an ethylenically unsaturated dicarboxylic acid having 4 to 12 carbon atoms is preferable, and examples thereof include: butendioic acid such as fumaric acid and maleic acid; itaconic acid; citraconic acid; and the like. It should be noted that the ethylenically unsaturated dicarboxylic acid also includes those which exist as an anhydride.

The ethylenically unsaturated dicarboxylic acid monoester is not particularly limited, but is usually an ethylenically unsaturated dicarboxylic acid having 4 to 12 carbon atoms and an alkyl monoester having 1 to 12 carbon atoms, preferably an ethylenically unsaturated dicarboxylic acid having 4 to 6 carbon atoms and an alkyl monoester having 2 to 8 carbon atoms, and more preferably a butendioic acid having 4 carbon atoms and an alkyl monoester having 2 to 6 carbon atoms.

Specific examples of the ethylenic unsaturated dicarboxylic acid monoester include: butenedione acid monoalkyl ester such as monomethyl fumarate, monoethyl fumarate, mono-n-butyl fumarate, monomethyl maleate, monoethyl maleate, mono-n-butyl maleate, monocyclopentyl fumarate, monocyclohexyl fumarate, monocyclohexenyl fumarate, monocyclopentyl maleate, monocyclohexyl maleate; and itaconic acid monoalkyl ester such as monomethyl itaconate, monoethyl itaconate, mono-n-butyl itaconate, monocyclohexyl itaconate, and the like. Among these, mono-n-butyl fumarate and mono-n-butyl maleate are preferable, and mono-n-butyl fumarate is particularly preferable.

Examples of the epoxy group-containing monomer include: epoxy group-containing (meth) acrylic acid esters such as glycidyl (meth) acrylate; epoxy group-containing vinyl ethers such as allyl glycidyl ether and vinyl glycidyl ether; and the like.

Examples of the monomer having a halogen group include unsaturated alcohol esters of halogen-containing saturated carboxylic acid, (meth) acrylic acid haloalkyl ester, (meth) acrylic acid haloacyloxyalkyl ester, (meth) acrylic acid (haloacetylcarbamoyloxy) alkyl ester, halogen-containing unsaturated ether, halogen-containing unsaturated ketone, halomethyl group-containing aromatic vinyl compound, halogen-containing unsaturated amide, and haloacetyl group-containing unsaturated monomer, and the like.

Examples of unsaturated alcohol esters of halogen-containing saturated carboxylic acids include vinyl chloroacetate, vinyl 2-chloropropionate, allyl chloroacetate and the like. Examples of the haloalkyl (meth) acrylate ester include chloromethyl (meth) acrylate, 1-chloroethyl (meth) acrylate, 2-chloroethyl (meth) acrylate, 1,2-dichloroethyl (meth) acrylate, 2-chloropropyl (meth) acrylate, 3-chloropropyl (meth) acrylate, 2,3-dichloropropyl (meth) acrylate, and the like. Examples of the haloacyloxyalkyl (meth) acrylate include 2-(chloroacetoxy) ethyl (meth) acrylate, 2-(chloroacetoxy) propyl (meth) acrylate, and 3-(chloroacetoxy) propyl (meth) acrylate, 3-(hydroxychloroacetoxy) propyl (meth) acrylate, and the like. Examples of the (meth) acrylic acid (haloacetylcarbamoyloxy) alkyl ester include 2-(chloroacetylcarbamoyloxy) ethyl (meth) acrylate and 3-(chloroacetylcarbamoyloxy) propyl (meth) acrylate. Examples of the halogen-containing unsaturated ether include chloromethyl vinyl ether, 2-chloroethyl vinyl ether, 3-chloropropyl vinyl ether, 2-chloroethyl allyl ether, 3-chloropropyl allyl ether and the like. Examples of halogen-containing unsaturated ketones include 2-chloroethyl vinyl ketone, 3-chloropropyl vinyl ketone, 2-chloroethyl allyl ketone, and the like. Examples of the halomethyl group-containing aromatic vinyl compound include p-chloromethylstyrene, m-chloromethylstyrene, o-chloromethylstyrene, p-chloromethyl-α-methylstyrene, and the like. Examples of the halogen-containing unsaturated amide include n-chloromethyl (meth) acrylamide and the like. Examples of the haloacetyl group-containing unsaturated monomer include 3-(hydroxychloroacetoxy) propyl allyl ether, p-vinylbenzyl chloroacetic acid ester, and the like.

These monomers containing a reactive group are used alone or in combination of two or more, and the ratio in the acrylic rubber is usually 0.01 to 20% by weight, preferably 0.1 to 10% by weight, more preferably 0.5 to 5% by weight, most preferably 1 to 3% by weight.

The other monomer used as necessary is not particularly limited as long as it can be copolymerized with the above-mentioned monomer. Examples of the other monomer include, for example, olefin-based monomer such as aromatic vinyl, ethylenically unsaturated nitrile, acrylamide monomer, and the like. Examples of the aromatic vinyl include styrene, α-methylstyrene, divinylbenzene and the like. Examples of the ethylenically unsaturated nitrile include acrylonitrile, methacrylonitrile, and the like. Examples of the acrylamide monomer include acrylamide, methacrylamide, and the like. Examples of other olefinic monomers include ethylene, propylene, vinyl acetate, ethyl vinyl ether, butyl vinyl ether, and the like.

These other monomers may be used alone or in combination of two or more, and the ratio of the other monomers in the acrylic rubber is usually in the range of 0 to 30% by weight, preferably 0 to 20% by weight, more preferably 0 to 15% by weight, most preferably 0 to 10% by weight.

<Acrylic Rubber>

The acrylic rubber that constitutes the acrylic rubber bale of the present invention mainly contains (meth) acrylic acid ester, but it preferably has a reactive group.

The reactive group is not particularly limited and may be appropriately selected according to purpose of use, but when the reactive group is preferably at least one functional group selected from the group consisting of a carboxyl group, an epoxy group and a halogen group, more preferably at least one functional group selected from the group consisting of a carboxyl group, an epoxy group and a chlorine atom, particularly preferably a carboxyl group, an epoxy group, most preferably a carboxyl group, it is preferable, since the crosslinking properties of the acrylic rubber bale can be highly improved. Further, the reactive group is preferably an ion reactive group such as a carboxyl group or an epoxy group, since the water resistance can be particularly improved. As the acrylic rubber having such a reactive group, a reactive group may be added to the acrylic rubber in a post-reaction, but an acrylic rubber obtained by copolymerizing a monomer containing a reactive group is preferable.

The content of the reactive group may be appropriately selected according to the purpose of use, but when it is usually in the range of 0.001% by weight or more, preferably 0.001 to 5% by weight, more preferably 0.01 to 3% by weight, particularly preferably 0.05 to 1% by weight, most preferably 0.1 to 0.5% by weight as weight ratio of the reactive group itself, it is preferable, since processability, strength properties, compression set resistance, oil resistance, cold resistance, and water resistance are highly well-balanced.

Specific examples of the acrylic rubber constituting the acrylic rubber bale of the present invention include at least one (meth) acrylic acid ester selected from the group consisting of (meth) acrylic acid alkyl ester and (meth) acrylic acid alkoxyalkyl ester, a monomer containing a reactive group, and other copolymerizable monomers as necessary, and the ratio in each acrylic rubber is: the bonding unit derived from at least one (meth) acrylic acid ester selected from the group consisting of (meth) acrylic acid alkyl ester and (meth) acrylic acid alkoxyalkyl ester is usually in the range of 50 to 99.99% by weight, preferably 70 to 99.9% by weight, more preferably 80 to 99.5% by weight, particularly preferably 87 to 99% by weight, the bonding unit derived from the monomer containing a reactive group is usually in the range of 0.01 to 20% by weight, preferably 0.1 to 10% by weight, more preferably 0.5 to 5% by weight, particularly preferably 1 to 3% by weight, and other monomer-derived bonding units is usually in the range of 0 to 30% by weight, preferably 0 to 20% by weight, more preferably 0 to 15% by weight, particularly preferably 0 to 10% by weight. By setting the bonding units derived from these monomers of the acrylic rubber within these ranges, the object of the present invention can be highly achieved, and when the acrylic rubber bale is a cross-linked product, it is preferable, since the water resistance and compression set resistance are remarkably improved.

When the weight average molecular weight (Mw) of the acrylic rubber constituting the acrylic rubber bale of the present invention is, by an absolute molecular weight measured by GPC-MALS, in the range of 1,000,000 to 5,000,000, preferably 1,100,000 to 3,500,000, more preferably 1,200,000 to 2,500,000, it is preferable, since the processability at the time of mixing the acrylic rubber bale, strength properties, and compression set resistance properties are highly well-balanced.

When the ratio (Mz / Mw) of the Z-average molecular weight (Mz) and the weight average molecular weight (Mw) of the acrylic rubber constituting the acrylic rubber bale of the present invention is, by an absolute molecular weight distribution measured by GPC-MALS, in the range of 1.3 or more, preferably 1.4 to 5, and more preferably 1.5 to 2, it is preferable, since the processability and strength properties of the acrylic rubber bale are highly well-balanced, and changes in physical properties during storage can be mitigated.

The glass transition temperature (Tg) of the acrylic rubber constituting the acrylic rubber bale of the present invention is not particularly limited, but is usually 20°C or lower, preferably 10°C or lower, and more preferably 0°C or lower. The lower limit value of the glass transition temperature (Tg) of the acrylic rubber bale is not particularly limited, but it is usually -80°C or higher, preferably -60°C or higher, more preferably -40°C or higher. When the glass transition temperature is the above-mentioned lower limit or higher, the oil resistance and heat resistance can be more excellent, and when the glass transition temperature is the above-mentioned upper limit or lower, the cold resistance and processability can be more excellent.

The content of the acrylic rubber in the acrylic rubber bale of the present invention is appropriately selected according to the purpose of use, but it is usually 95% by weight or more, preferably 97% by weight or more, more preferably 98% by weight or more.

<Acrylic Rubber bale>

The acrylic rubber bale of the present invention is characterized in that it includes the above-mentioned acrylic rubber and that an amount of gel insoluble in methyl ethyl ketone is specifically set.

The size of the acrylic rubber bale of the present invention is not particularly limited, but the width is usually in the range of 100 to 800 mm, preferably 200 to 500 mm, more preferably 250 to 450 mm, and the length is usually in the range of 300 to 1,200 mm, preferably 400 to 1,000 mm, more preferably 500 to 800 mm, and the height is usually in the range of 50 to 500 mm, preferably 100 to 300 mm, more preferably, 150 to 250 mm.

When the amount of gel insoluble in methyl ethyl ketone in the acrylic rubber bale of the present invention is 50% by weight or less, preferably 30% by weight or less, more preferably 20% by weight or less, particularly preferably 10% by weight or less, most preferably 5% by weight or less, it is preferable, since the processability when kneading by Banbury mixer and the like is highly improved. The gel insoluble in the methyl ethyl ketone in the acrylic rubber bale of the present invention had different properties depending on the solvent used, and the amount of such gel insoluble did not particularly correlate with the amount of gel insoluble in THF (tetrahydrofuran).

The values of the amount of gel insoluble in methyl ethyl ketone in the acrylic rubber bale of the present invention arbitrarily measured at 20 points are not particularly limited, but when all values of the 20 points are within the range of the average value $\pm 5$, preferably all values of 20 points are within the range of the average value $\pm 3$, it is preferable, since there are no processability variations and the physical properties of the rubber mixture or the rubber cross-linked product are stabilized.

The water content of the acrylic rubber bale of the present invention is not particularly limited, but when it is usually less than 1% by weight, preferably 0.8% by weight or less, more preferably 0.6% by weight or less, it is preferable, since vulcanization characteristics are optimized and properties such as heat resistance and water resistance are highly excellent.

The specific gravity of the acrylic rubber bale of the present invention is not particularly limited, but when it is usually in the range of 0.7 to 1.5, preferably 0.8 to 1.4, more preferably 0.9 to 1.3, particularly preferably 0.95 to 1.25, most preferably 1.0 to 1.2, it is preferable, since the storage stability is highly excellent.

The pH of the acrylic rubber bale of the present invention is not particularly limited, but when it is usually within the range of 6 or less, preferably 2 to 6, more preferably 2.5 to 5.5, particularly preferably 3 to 5, it is preferable, since the storage stability is highly improved.

When the ash content of the acrylic rubber bale of the present invention is 0.5% by weight or less, preferably 0.4% by weight or less, more preferably 0.3% by weight or less, particularly preferably 0.2% by weight or less, most preferably 0.15% by weight or less, it is preferable, since storage stability and water resistance are excellent.

The lower limit of the ash content of the acrylic rubber bale of the present invention is not particularly limited, but when it is usually 0.0001% by weight or more, preferably 0.0005% by weight or more, more preferably 0.001% by weight or more, particularly preferably 0.005% by weight or more, and most preferably 0.01% by weight or more, it is preferable, since the stickiness to the metal surface is suppressed and workability is excellent.

The ash content at which storage stability, water resistance and workability of the acrylic rubber bale of the present invention are highly well-balanced is usually in the range of 0.0001 to 0.5% by weight, preferably 0.0005 to 0.4% by weight, more preferably 0.001 to 0.3% by weight, particularly preferably 0.005 to 0.2% by weight, most preferably 0.01 to 0.15% by weight.

The content (total content) of the at least one element selected from the group consisting of sodium, sulfur, calcium, magnesium and phosphorus in the ash of the acrylic rubber bale of the present invention is not particularly limited, but when it is at least 30% by weight, preferably 50% by weight or more, more preferably 70% by weight or more, particularly preferably 80% by weight or more, as a ratio with respect to the total ash content, it is preferable, since storage stability and water resistance are highly excellent.

The total content of the sodium and the sulfur in the ash of the acrylic rubber bale of the present invention is not particularly limited, but when it is 30% by weight or more with respect to the total ash content, preferably 50% by weight or more, more preferably 70% by weight or more, particularly preferably 80% by weight or more, it is preferable, since storage stability and water resistance are highly excellent.

The ratio of sodium to sulfur ([Na]/[S]) in the ash of the acrylic rubber bale of the present invention, by weight ratio, is in the range of 0.4 to 2.5, preferably 0.6 to 2, preferably 0.8 to 1.7, more preferably 1 to 1.5, it is preferable, since water resistance is excellent.

The total amount of magnesium and phosphorus in the ash of the acrylic rubber bale of the present invention is not particularly limited, but when it is, with respect to total ash content, usually 30% by weight or more, preferably 50% by weight or more, more preferably 70% by weight or more, particularly preferably 80% by weight or more, it is preferable, since storage stability and water resistance are excellent.

The ratio of magnesium to phosphorus ([Mg]/[P]) in the ash of the acrylic rubber bale of the present invention is not particularly limited, but when it is usually in the range of 0.4 to 2.5, preferably 0.4 to 1.3, more preferably 0.4 to 1, particularly preferably 0.45 to 0.75, and most preferably 0.5 to 0.7 by weight ratio, it is preferable, since storage stability and durability are excellent.

The complex viscosity ([η] 60°C) of the acrylic rubber bale according to the present invention at 60°C is not particularly limited, but when it is usually in the range of 15,000 Pa·s or less, preferably 2,000 to 10,000 Pa·s, more preferably 2,500 to 7,000 Pa·s, and most preferably 2,700 to 5,500 Pa·s, it is preferable, since the processability, oil resistance, and shape retention and are excellent.

The complex viscosity ([η] 100°C) at 100°C of the acrylic rubber bale of the present invention is not particularly limited, but when it is usually in the range of 1,500 to 6,000 Pa·s, preferably 2,000 to 5,000 Pa·s, more preferably 2,500 to 4,000 Pa·s, and most preferably 2,500 to 3,500 Pa·s, it is preferable, since the processability, oil resistance and shape retention are excellent.

The ratio ([η] 100°C / [η] 60°C) of complex viscosity ([η] 100°C) at 100°C and complex viscosity ([η] 60°C) at 60°C of the acrylic rubber bale of the present invention is not particularly limited, but it is usually in the range of 0.5 or more, preferably 0.6 or more, more preferably 0.7 or more, particularly preferably 0.8 or more, most preferably 0.83 or more. Further, when the ratio ([η] 100°C / [η] 60°C) of complex viscosity ([η] 100°C) at 100°C and complex viscosity ([η] 60°C) at 60°C is usually in the range of 0.5 to 0.99, preferably 0.5 to 0.98, more preferably 0.6 to 0.95, most preferably 0.75 to 0.93, it is preferable, since the processability, oil resistance, and shape retention are highly well-balanced.

The Mooney viscosity (ML1+4,100°C) of the acrylic rubber bale of the present invention is not particularly limited, but when it is usually in the range of 10 to 150, preferably 20 to 100, more preferably 25 to 70, it is preferable, since the processability and strength properties are highly well-balanced.

<Method for Producing Acrylic Rubber Bale>

The method for producing the acrylic rubber bale is not particularly limited, but the acrylic rubber bale according to the present invention can be easily produced by, for example, a method comprising: an emulsion polymerization process to emulsify a monomer component mainly containing a (meth) acrylic acid ester with water and an emulsifier, and to emulsion-polymerize the emulsified monomer component to polymerization conversion rate of 90% by weight or more in the presence of a polymerization catalyst to obtain an emulsion polymerization liquid; a coagulation process to contact the obtained emulsion polymerization liquid with a coagulant liquid to generate hydrous crumbs; a washing process to wash the generated hydrous crumbs; a drying process to dry the washed hydrous crumbs to a water content of less than 1% by weight and then extrude the dry rubber by using a screw-type extruder; and a baling process to bale the extruded dry rubber.

(Emulsion Polymerization Process)

The emulsion polymerization process in the method for producing an acrylic rubber bale according to the present invention is characterized by that a monomer component is emulsified with water and an emulsifier, and that an emulsion polymerization liquid emulsion-polymerized to polymerization conversion rate of 90% by weight or more in the presence of a catalyst is obtained.

The emulsifier to be used is not particularly limited and may be in accordance with a conventional method, and examples thereof include an anionic emulsifier, a cationic emulsifier, and a nonionic emulsifier. Among these, an anionic emulsifier and a nonionic emulsifier are preferable, an anionic emulsifier is more preferable, a phosphoric acid emulsifier and a sulfuric acid emulsifier are particularly preferable, and a phosphoric acid emulsifier is most preferable.

As the anionic emulsifier, those usually used are used without particular limitation, and examples thereof include a fatty acid emulsifier, a sulfonic acid emulsifier, a sulfosuccinic acid emulsifier, a sulfuric acid emulsifier, and a phosphoric acid emulsifier, preferably a sulfuric acid emulsifier, and a phosphoric acid emulsifier, more preferably phosphoric acid emulsifier

Examples of the fatty acid emulsifier include sodium octanoate, sodium decanoate, sodium laurate, sodium myristate, sodium palmitate, sodium stearate and the like.

Examples of the sulfonic acid emulsifier include sodium hexanesulfonate, sodium octanesulfonate, sodium decanesulfonate, sodium toluenesulfonate, sodium cumenesulfonate, sodium octylbenzenesulfonate, sodium dodecylbenzenesulfonate, and dodecyl. Examples thereof include ammonium benzene sulfonate, sodium naphthalene sulfonate, sodium alkyl naphthalene sulfonate, sodium alkyl diphenyl ether disulfonate, and the like.

Examples of the sulfosuccinic acid emulsifier include dioctyl sodium sulfosuccinate and sodium dihexyl sulfosuccinate.

The sulfuric acid-based emulsifier is not particularly limited and may be prepared by a conventional method, but a sulfuric acid ester salt can be preferably used. Examples of the sulfate ester salt include sodium lauryl sulfate, ammonium lauryl sulfate, sodium myristyl sulfate, sodium laureth sulfate, sodium polyoxyethylene alkyl sulfate, sodium polyoxyethylene alkylaryl sulfate, and the like, and preferably sodium lauryl sulfate.

Examples of the phosphoric acid-based emulsifier include sodium lauryl phosphate, potassium lauryl phosphate, sodium polyoxyalkylene alkyl ether phosphate, and the like.

Examples of the cationic emulsifier include alkyl trimethylammonium chloride, dialkylammonium chloride, benzyl ammonium chloride and the like.

The nonionic emulsifier is not particularly limited, but examples thereof include: polyoxyalkylene fatty acid esters such as polyoxyethylene stearic acid esters; polyoxyalkylene alkyl ethers such as polyoxyethylene dodecyl ether; polyoxyalkylene alkylphenol ethers such as polyoxyethylene nonylphenyl ether; polyoxyethylene sorbitan alkyl ester. Among these, polyoxyalkylene alkyl ether and polyoxyalkylene alkylphenol ether are preferable, and polyoxyethylene alkyl ether and polyoxyethylene alkylphenol ether are more preferable.

These emulsifiers can be used alone or in combination of two or more kinds, and the amount of the emulsifiers used is usually in the range of 0.01 to 10 parts by weight, preferably 0.1 to 5 parts by weight, more preferably 1 to3 parts by weight, with respect to the monomer component 100 parts by weight.

The method for mixing the monomer component, water and the emulsifier may be according to a conventional method, and examples thereof include a method of stirring the monomer, the emulsifier and water using a stirrer such as a homogenizer or a disk turbine, and the like. The amount of water used relative to 100 parts by weight of the monomer component is usually in the range of 10 to 750 parts by weight, preferably 50 to 500 parts by weight, more preferably 100 to 400 parts by weight.

The polymerization catalyst used is not particularly limited as long as it is usually used in emulsion polymerization, but, for example, a redox catalyst composed of a radical generator and a reducing agent can be used.

Examples of the radical generator include peroxides and azo compounds, and peroxides are preferable. An inorganic peroxide or an organic peroxide is used as the peroxide.

Examples of the inorganic peroxides include sodium persulfate, potassium persulfate, hydrogen peroxide, ammonium persulfate and the like. Among these, potassium persulfate, hydrogen peroxide and ammonium persulfate are preferable, and potassium persulfate is particularly preferable.

The organic peroxide is not particularly limited as long as it is a known one used in emulsion polymerization. Examples of the organic peroxide include, for example, 2,2-di(4,4-di-(t-butylperoxy) cyclohexyl) propane, 1-di-(t-hexylperoxy) cyclohexane, 1,1-di-(t-butylperoxy) cyclohexane, 4,4-di-(t-butylperoxy) n-butylvalerate, 2, 2-di-(t-butylperoxy) butane, t-butyl hydroperoxide, cumene hydroperoxide, diisopropylbenzene hydroperoxide, paramenthane hydroperoxide, benzoyl peroxide, 1,1,3,3-tetraethyl butyl hydroperoxide, t-butyl cumyl peroxide, di-t-butyl peroxide, di-t-hexyl peroxide, di(2-t-butylperoxyisopropyl) benzene, dicumyl peroxide, diisobutyryl peroxide, di(3,5,5-trimethylhexanoyl) peroxide, dilauroyl peroxide, disuccinic acid peroxide, dibenzoyl peroxide, di(3-methylbenzoyl) peroxide, benzoyl (3-methylbenzoyl) peroxide, diisobutyryl peroxydicarbonate, di-n-propyl peroxydicarbonate, di(2-ethylhexyl) peroxydicarbonate, di-sec-butylperoxydicarbonate, 1,1,3,3-tetramethylbutylperoxyneodecanate, t-hexylperoxypivalate, t-butylperoxyneodecanate, t-hexylperoxypivalate, t-butylperoxypivalate, 2,5-dimethyl-2,5-di(2-ethylhexanoylperoxy) hexane, 1,1,3,3-tetramethylbutylperoxy-2-ethylhexanate, t-hexylperoxy-2-ethylhexanate, t-butylperoxy-3,5,5-trimethylhexanate, t-hexylperoxyisopropyl monocarbonate, t-butylperoxyisopropyl monocarbonate, t-butylperoxy-2-ethylhexyl monocarbonate, 2,5-dimethyl-2,5-di(benzoylperoxy) hexane, t-butylperoxyacetate, t-hexylperoxybenzoate, t-butyl peroxybenzoate, 2,5-dimethyl-2,5-di(t-butylperoxy) hexane. Among these, diisopropylbenzene hydroperoxide, cumene hydroperoxide, paramenthane hydroperoxide, benzoyl peroxide and the like are preferable.

Examples of the azo compound include, for example, azobisisoptyronitrile, 4,4'-azobis (4-cyanovaleric acid), 2,2'-azobis [2-(2-imidazolin-2-yl) propane], 2,2'-azobis (propane-2-carboamidine), 2,2'-azobis [N-(2-carboxyethyl)-2-methylpropanamide], 2,2'-azobis {2-[1-(2-hydroxyethyl)-2-imidazoline-2-yl] propane}, 2,2'-azobis (1-imino-1-pyrrolidino-2-methylpropane) and 2,2'-azobis {2-methyl-N-[1,1-bis (hydroxymethyl)-2-hydroxyethyl] propanamide}, and the like.

These radical generators may be used alone or in combination of two or more, and the amount thereof is usually in the range of 0.0001 to 5 parts by weight, preferably 0.0005 to 1 part by weight, more preferably 0.001 to 0.5 part by weight with respect to 100 parts by weight of the monomer component.

The reducing agent can be used without particular limitation as long as it is used in a redox catalyst for emulsion polymerization, but in the present invention, it is particularly preferable to use at least two reducing agents. As the at least two reducing agents, for example, a combination of a metal ion compound in a reduced state and another reducing agent is preferable.

The metal ion compound in the reduced state is not particularly limited, and examples thereof include ferrous sulfate, sodium hexamethylenediamine iron tetraacetate, cuprous naphthenate, and the like, and among these, ferrous sulfate is preferable. These metal ion compounds in a reduced state can be used alone or in combination of two or more, and the amount of the metal ion component used with respect to 100 parts by weight of the monomer component is usually in the range of 0.000001 to 0.01 parts by weight, preferably 0.00001 to 0.001 parts by weight, more preferably 0.00005 to 0.0005 parts by weight.

The reducing agent other than the metal ion compound in the reduced state is not particularly limited, but examples thereof include: ascorbic acids such as ascorbic acid, sodium ascorbate, potassium ascorbate or a salt thereof; erythorbic acids such as erythorbic acid, sodium erythorbate, potassium erythorbate or a salt thereof; sulfinic acid salts such as sodium hydroxymethanesulfinate; sulfites such as sodium sulfite, potassium sulfite, sodium bisulfite, aldehyde sodium bisulfite, potassium bisulfite; pyrosulfites such as sodium pyrosulfite, potassium pyrosulfite, sodium hydrogen sulfite, potassium hydrogensulfite and the like; thiosulfates such as sodium thiosulfate and potassium thiosulfate; phosphorous acid such as phosphorous acid, sodium phosphite, potassium phosphite, sodium hydrogen phosphite and potassium hydrogen phosphite, or salts thereof; pyrophosphite such as pyrophosphite, sodium pyrophosphite, potassium pyrophosphite, sodium hydrogen pyrophosphite, potassium hydrogen pyrophosphite, or a salt thereof; sodium formaldehyde sulfoxylate, and the like. Among these, ascorbic acid, or a salt thereof, sodium formaldehyde sulfoxylate and the like are preferable, and ascorbic acid or a salt thereof is particularly preferable.

These reducing agents other than the metal ion compound in the reduced state can be used alone or in combination of two or more, and the amount used with respect to 100 parts by weight of the monomer component is usually in the range of 0.001 to 1 part by weight, preferably 0.005 to 0.5 part by weight, more preferably 0.01 to 0.3 part by weight.

A preferable combination of the metal ion compound in the reduced state and the other reducing agent is a combination of ferrous sulfate and ascorbic acid or a salt thereof and / or sodium formaldehyde sulfoxylate, more preferably a combination of ferrous sulfate with ascorbate and / or sodium formaldehyde sulfoxylate, most preferably a combination of ferrous sulfate and ascorbate. The amount of ferrous sulfate used with respect to 100 parts by weight of the monomer component at this time is usually in the range of 0.000001 to 0.01 parts by weight, preferably 0.00001 to 0.001 parts by weight, more preferably 0.00005 to 0.0005 parts by weight, and the amount of ascorbic acid or a salt thereof and / or sodium formaldehyde sulfoxylate used with respect to 100 parts by weight of the monomer component is usually in the range of 0.001 to 1 part by weight, preferably 0.005 to 0.5 part by weight, more preferably 0.01 to 0.3 part by weight.

The amount of water to be used with respect to 100 parts by weight of the monomer component in the emulsion polymerization reaction may be only that used for preparing the emulsion of the above-mentioned monomer component, but it is usually in the range of 10 to 1,000 parts by weight, preferably 50 to 500 parts by weight, more preferably 80 to 400 parts by weight, most preferably 100 to 300 parts by weight.

The emulsion polymerization reaction may be a conventional method, and may be a batch method, a semi-batch method, or a continuous method. The polymerization temperature and the polymerization time are not particularly limited and can be appropriately selected depending on the type of the polymerization initiator used and the like. The polymerization temperature is usually in the range of 0 to 100°C, preferably 5 to 80°C, more preferably 10 to 50°C, and the polymerization time is usually 0.5 to 100 hours, preferably 1 to 10 hours.

The polymerization conversion rate of the emulsion polymerization reaction is not particularly limited, but the acrylic rubber bale produced when the polymerization conversion rate is usually 80% by weight or more, preferably 90% by weight or more, more preferably 95% by weight or more, is preferable since the acrylic rubber bale is excellent in strength properties and free of monomer odor. A polymerization terminator may be used for termination of the polymerization.

(Coagulation Process)

The coagulation process in the method for producing an acrylic rubber bale according to the present invention is characterized in that the obtained emulsion polymerization liquid is added to the coagulant liquid (coagulant-containing aqueous solution) being stirred to produce hydrous crumbs.

The solid content concentration of the emulsion polymerization liquid used in the coagulation process is not particularly limited, but it is usually adjusted to be in the range of 5 to 50% by weight, preferably 10 to 45% by weight, more preferably 20 to 40% by weight.

The coagulant to be used is not particularly limited, but a metal salt is usually used. Examples of the metal salt include, for example, metal salts such as alkali metal salt, periodic table group 2 metal salt, other metal salts, and the like, preferably alkali metal salt and periodic table group 2 metal salt, more preferably periodic table group 2 metal salt, particularly preferably magnesium salt.

Examples of the alkali metal salt include, for example: sodium salts such as sodium chloride, sodium nitrate, sodium sulphate, and the like; potassium salts such as potassium chloride, potassium nitrate, potassium sulfate, and the like; lithium salts such as lithium chloride, lithium nitrate, lithium sulfate, and the like. Among these, sodium salts are preferable, sodium chloride and sodium sulfate are particularly preferable.

Examples of the periodic table group 2 metal salt include, for example: magnesium chloride, calcium chloride, magnesium nitrate, calcium nitrate, magnesium sulfate, calcium sulfate, and the like, preferably calcium chloride, magnesium sulfate, more preferably magnesium sulfate.

Examples of the other metal salt include, for example: zinc chloride, titanium chloride, manganese chloride, iron chloride, cobalt chloride, nickel chloride, aluminum chloride, tin chloride, zinc nitrate, titanium nitrate, manganese nitrate, iron nitrate, cobalt nitrate, nickel nitrate, aluminum nitrate, tin nitrate, zinc sulfate, titanium sulfate, manganese sulfate, iron sulfate, cobalt sulfate, nickel sulfate, aluminum sulfate, tin sulfate, and the like.

These coagulants can be used alone or in combination of two or more, and the amount thereof with respect to 100 parts by weight of the monomer component is usually in the range of 0.01 to 100 parts by weight, preferably 0.1 to 50 parts by weight, more preferably 1 to 30 parts by weight. When the coagulant is within this range, it is preferable, since the compression set resistance and the water resistance when the acrylic rubber bale is cross-linked can be highly improved while the acrylic rubber is sufficiently coagulated.

When the concentration of the coagulant in the coagulant liquid to be used is usually in the range of 0.1 to 20% by weight, preferably 0.5 to 15% by weight, more preferably 1 to 10% by weight, particularly preferably 1.5 to 5% by weight, it is preferable, since the particle size of the hydrous crumbs generated are uniform and can be focused in a specific region.

The temperature of the coagulant liquid is not particularly limited, but when it is usually within a range of 40°C or higher, preferably 40 to 90°C, and more preferably 50 to 80°C, it is preferable, since uniform hydrous crumbs are generated.

The stirring speed (rotation speed) of the coagulant liquid being stirred, that is, the rotation speed of the stirring blade of the stirring device, is not particularly limited, but it is usually in the range of 100 rpm or higher, preferably 200 to 1,000 rpm, more preferably 300 to 900 rpm, and particularly preferably 400 to 800 rpm. It is preferable that the rotation speed is such a rotation speed that stirring is performed violently to such an extent that the particle size of the hydrous crumbs to be generated can be made small and uniform. Generation of crumbs having excessively large and small particle size can be suppressed by setting the rotation speed to the above-mentioned lower limit or higher, and the coagulation reaction can be more easily controlled by controlling the amount to be equal to or less than the above-mentioned upper limit.

The peripheral speed of the coagulant liquid being stirred is the speed of the outer circumference of the stirring blade of the stirring device, and is not particularly limited, but it is preferable that the above coagulant liquid is vigorously stirred to a certain extent, since the particle size of the hydrous crumbs to be generated can be made smaller and uniform. The above peripheral speed is usually 0.5 m/s or greater, preferably 1 m/s or greater, more preferably 1.5 m/s or greater, particularly preferably 2 m/s or greater, and most preferably 2.5 m/s or greater. On the other hand, although the upper limit of the peripheral speed is not particularly limited, when the peripheral speed is usually 50 m/s or lower, preferably 30 m/s or lower, more preferably 25 m/s or lower, and most preferably 20 m/s or lower, it is preferable, since the coagulation reaction can be easily controlled.

By specifying the above conditions of the coagulation reaction in the coagulation process (contact method, solid content concentration of emulsion polymerization liquid, concentration and temperature of the coagulant liquid, rotation speed and peripheral speed during stirring of the coagulant liquid) in a specific range, the shape and crumb diameter of the hydrous crumbs to be generated are uniform and focused, and the removal of emulsifiers and coagulants during washing and dehydration is significantly improved, which is preferable.

(Washing Process)

The washing process in the method for producing an acrylic rubber bale of the present invention is a process of washing the generated hydrous crumbs with water.

The washing method is not particularly limited and may be a conventional method. For example, the generated hydrous crumbs can be washed by mixing with a large amount of water.

The amount of hot water to be used is not particularly limited, but when the amount of water with respect to 100 parts by weight of the above-mentioned monomer component per one washing is usually in the range of 50 parts by weight or more, preferably 50 to 15,000 parts by weight, more preferably 100 to 10,000 parts by weight, particularly preferably 150 to 5,000 parts by weight, it is preferable, since the ash content in the acrylic rubber can be effectively reduced.

The temperature of the water to be used in the washing process is not particularly limited, but hot water is preferably used, and when it is usually in the range of 40°C or higher, preferably 40 to 100°C, more preferably 50 to 90°C, most preferably 60 to 80°C, it is preferable, since the washing efficiency is remarkably raised.

By setting the water temperature below the above-mentioned lower limit, the emulsifier and the coagulant are separated from the hydrous crumbs, so that the washing efficiency improves.

The washing time is not particularly limited, but it is usually in the range of 1 to 120 minutes, preferably 2 to 60 minutes, more preferably 3 to 30 minutes.

The number of washings is not limited, but is usually 1 to 10 times, preferably a plurality of times, more preferably 2 to 3 times. From the viewpoint of reducing the residual amount of the coagulant in the finally obtained acrylic rubber, it is desirable that the number of times of washing is large, but as described above, the number of washings can be remarkably reduced by specifying the shape of the hydrous crumbs and the hydrous crumb diameter and / or specifying the washing temperature within the above-mentioned range.

(Dehydration Process)

In the method for producing an acrylic rubber bale of the present invention, it is preferable to provide a dehydration process to squeeze out water from the above-mentioned hydrous crumbs after washing, before the drying process, since the ash content consisting of emulsifiers and coagulants that could not be removed in the washing process can be reduced, so that the water resistance of the acrylic rubber bale can be remarkably improved and the storage stability and processability can be improved.

The dehydrator may be any conventional one without particular limitation, and examples thereof include a centrifugal separator, a squeezer, and a screw-type extruder. In particular, the screw-type extruder is preferable, since it can significantly lower the water content of the hydrous crumbs. Water content of the sticky acrylic rubber can usually be dehydrated only up to about 45 to 55% by weight by the centrifugal separator because the acrylic rubber adheres between the walls and slits in the centrifugal separator. Therefore, a mechanism that forcibly squeezes out the water like that of a screw-type extruder is preferable.

The water content of the hydrous crumbs after dehydration is not particularly limited, but it is usually in the range of 1 to 50% by weight, preferably 1 to 40% by weight, more preferably 10 to 40% by weight, more preferably 15 to 35% by weight. By setting the water content after dehydration to the above-mentioned lower limit or higher, the dehydration time can be shortened, and the deterioration of the acrylic rubber can be suppressed, and by setting it to the above-mentioned upper limit or lower, the ash content can be sufficiently reduced.

(Drying Process)

The drying process in the method for producing an acrylic rubber bale of the present invention is a process of using a screw-type extruder to dry the hydrous crumbs after the above washing and preferably after dehydration to extrude the dry rubber having a water content of less than 1% by weight.

The temperature of the hydrous crumbs charged into the screw-type extruder is not particularly limited, but when the temperature is usually in the range of 40°C or higher, preferably 40 to 100°C, more preferably 50 to 90°C, particularly preferably 55 to 85°C, most preferably 60 to 80°C, it is preferable, since it is possible to securely dry the hydrous crumbs having a large specific heat of 1.5 to 2.5 KJ/kg·K, which is hard to raise the temperature, like the acrylic rubber of the present invention, in the screw-type extruder. **In** particular, in the present invention, it is important that the hydrous crumbs are dried and melt-kneaded to a substantially water-free state (water content after dehydration described below) in a screw-type extruder, because the gel content that increases rapidly, especially when the polymerization conversion rate of emulsion polymerization is high, is extinguished.

The drying temperature of the screw-type extruder may be appropriately selected, but when the temperature is usually in the range of 100 to 250°C, preferably 110 to 200°C, more preferably 120 to 180°C, it is preferable, since the acrylic rubber can be efficiently dried without being burnt or deteriorated and the amount gel insoluble in methyl ethyl ketone of the acrylic rubber bale can be reduced.

The shape of the dry rubber is not particularly limited, and examples thereof include crumb-shaped, powder-shaped, rod-shaped, sheet-shaped and the like, and among these, the sheet-shaped is preferable, since air is not entrapped so that the acrylic rubber bale (with large specific gravity) excellent in storage stability can be produced.

The water content of the dry rubber is less than 1% by weight, preferably 0.8% by weight or less, more preferably 0.6% by weight or less.

(Baling Process)

The baling process in the method for producing an acrylic rubber bale of the present invention is a process of baling the obtained dry rubber having a water content of less than 1% by weight.

The dry rubber can be baled according to a conventional method. For example, the dry rubber can be produced by putting into a baler and compressed. The pressure for compression is appropriately selected according to the purpose of use, but it is usually in the range of 0.1 to 15 MPa, preferably 0.5 to 10 MPa, and more preferably 1 to 5 MPa. The compression time is not particularly limited, but it is usually in the range of 1 to 60 seconds, preferably 5 to 30 seconds, more preferably 10 to 20 seconds.

In the present invention, it is also possible to make a sheet-shaped dry rubber, laminate the sheets, and integrate them into a bale. The baling by laminating sheets is preferable, since it is easy to produce a bale with few bubbles (has large specific gravity), which is excellent in storage stability, processability and handleability.

(Dehydration/Drying Process and Baling Process by Screw-Type Extruder)

In the present invention, it is preferable to perform the dehydration process and the drying process using a screw-type extruder provided with a dehydration barrel having a dehydration slit, a drying barrel for drying under reduced pressure, and a die at the tip end. Further, it is preferable to perform a baling process thereafter. The embodiment is described hereinafter.

Draining Process

In the method for producing an acrylic rubber bale of the present invention, it is preferable to provide a draining process of separating free water from the hydrous crumbs after washing with a drainer before shifting from the washing process to the dehydration/drying process, since the dehydration and drying efficiency are improved.

As the drainer, known ones can be used without particular limitation, and examples thereof include a wire mesh, a screen, an electric sifter, and the like, and the wire mesh and the screen are preferable.

The opening of the drainer is not particularly limited, but when it is usually in the range of 0.01 to 5 mm, preferably 0.1 to 1 mm, more preferably 0.2 to 0.6 mm, it is preferable, since the loss of hydrous crumbs is small, and the draining can be performed efficiently.

The water content of the hydrous crumbs after draining, which is the water content of the hydrous crumbs to be supplied to the dehydration/drying/molding process is not particularly limited, but it is usually in the range of 50 to 80% by weight, preferably 50 to 70% by weight, more preferably 50 to 60% by weight.

The temperature of the hydrous crumbs after draining, which is the temperature of the hydrous crumbs to be supplied to the dehydration/drying/molding process is not particularly limited, but it is usually in the range of 40°C or higher, preferably 40 to 95°C, more preferably 50 to 90°C, particularly preferably 55 to 85°C, most preferably 60 to 80°C.

Dehydration and Drying in a Dehydration Barrel Section

Dehydration of hydrous crumbs is performed in a dehydration barrel having a dehydration slit. The opening of the dehydration slit may be appropriately selected according to conditions of use, but when the opening is usually in the range of 0.1 to 1 mm, preferably 0.2 to 0.6 mm, it is preferable, since loss of the hydrous crumbs is small, and dehydration of the hydrous crumbs can be efficiently performed.

The number of dehydration barrels in the screw-type extruder is not particularly limited, but when the number is usually plural, preferably 2 to 10, more preferably 3 to 6, it is preferable from the viewpoint of efficient dehydration of the sticky acrylic rubber.

There are two types of dehydration from the hydrous crumbs in the dehydration barrel: liquid removal from the dehydration slit (drainage) and steam removal (steam exhausting). **In** the present invention, the drainage is defined as dehydration, and the steam exhausting is defined as drying, so that they can be distinguished.

When using a screw-type extruder provided with a plurality of dehydration barrels, it is preferable to combine drainage (dehydration) and steam exhausting because it is possible to efficiently dehydrate the sticky acrylic rubber and reduce the water content. The selection of each dehydration barrel to be a drainage-type dehydration barrel or a steam-exhausting-type dehydration barrel of a screw-type extruder having three or more dehydration barrels may be appropriately made according to the purpose of use, but in order to reduce the ash content in acrylic rubber that is usually produced, it is preferable to increase the number of drainage-type barrels, for example, two dehydration barrels can be selected as drainage barrels when the screw-type extruder is provided with three dehydration barrels, or three dehydration barrels can be selected as drainage barrels when the screw-type extruder is provided with four dehydration barrels.

The set temperature of the dehydration barrel is appropriately selected depending on the type of acrylic rubber, the ash content, the water content, the operating conditions, and the like, but it is usually in the range of 60 to 150°C, preferably 70 to 140°C, more preferably 80 to 130°C. The set temperature of the dehydration barrel for dehydration in the drainage state is usually in the range of 60 to 120°C, preferably 70 to 110°C, more preferably 80 to 100°C. The set temperature of the dehydration barrel for drying in the steam exhausting state is usually in the range of 100 to 150°C, preferably 105 to 140°C, more preferably 110 to 130°C.

The water content after the drainage-type dehydration to squeeze water from the hydrous crumbs is not particularly limited, but when it is usually 1 to 45% by weight, preferably 1 to 40% by weight, more preferably 5 to 35% by weight, particularly preferably 10 to 35% by weight, it is preferable, since the productivity and the ash removal efficiency are highly well-balanced.

When the dehydration is performed by a centrifuge or the like, dehydration of the sticky acrylic rubber can be hardly done because the acrylic rubber adheres to the dehydration slit portion (the water content is up to about 45 to 55% by weight). **In** the present invention, the water content can be reduced up to said content by using a screw-type extruder having a dehydrating slit and forcibly squeezing water by a screw.

When the drainage-type dehydration barrel and the steam-exhausting-type dehydration barrel are provided, the water content of the hydrous crumbs after the dehydration in the drainage-type dehydration barrel section is usually 5 to 45% by weight, preferably 10 to 40% by weight, more preferably 15 to 35% by weight, and the water content of the hydrous crumbs after the preliminary drying in the steam-exhausting-type dehydration barrel section is usually 1 to 30% by weight, preferably 3 to 20% by weight, more preferably 5 to 15% by weight.

By setting the water content after dehydration to the above-mentioned lower limit or more, the dehydration time can be shortened, and the deterioration of acrylic rubber can be suppressed, and by setting it to the above-mentioned upper limit or less, the ash content can be sufficiently reduced.

Drying in Drying Barrel Section

The hydrous crumbs dehydrated/dried in the above dehydration barrel section are further dried in the drying barrel section under reduced pressure.

The degree of pressure reduction of the drying barrel may be appropriately selected, but when it is usually 1 to 50 kPa, preferably 2 to 30 kPa, and more preferably 3 to 20 kPa, it is preferable, since the hydrous crumbs can be efficiently dried.

The set temperature of the drying barrel may be appropriately selected, but when the temperature is usually in the range of 100 to 250°C, preferably 110 to 200°C, more preferably 120 to 180°C, it is preferable, since there is no burning or deterioration of the acrylic rubber, so that the acrylic rubber is efficiently dried and the amount of gel insoluble in the methyl ethyl ketone in the acrylic rubber can be reduced.

The number of drying barrels in the screw-type extruder is not particularly limited, but is usually plural, preferably 2 to 10, and more preferably 3 to 8. The degree of pressure reduction in the case of having a plurality of drying barrels may be a degree of pressure reduction similar to that of all the drying barrels, or it may vary by the drying barrel. The set temperature in the case of having multiple drying barrels may be similar to that of all the drying barrels or it may vary by the drying barrel, but when the temperature of the discharge portion (closer to the die) is set higher than the temperature of the introduction portion (closer to the dehydration barrel), it is preferable, since the drying efficiency can be increased.

The water content of the dry rubber after drying is usually less than 1% by weight, preferably 0.8% by weight or less, more preferably 0.6% by weight or less. In the present invention, by melting and kneading the hydrous crumbs in a state where the water content is substantially free of water in the drying barrel of the screw-type extruder, the amount of gel insoluble in the methyl ethyl ketone of the acrylic rubber bale disappears, so that processability of the acrylic rubber bale during kneading by Banbury mixer or the like is remarkably improved, which is preferable.

Shape of the Acrylic Rubber (Die Portion)

The acrylic rubber dehydrated and dried by the screw portions of the dehydration barrel and the drying barrel is sent to a screwless straightening die portion. A breaker plate or a wire net may or may not be provided between the screw portion and the die portion.

The extruded acrylic rubber can be obtained in various shapes such as a granular shape, a columnar shape, a round bar shape and a sheet shape depending on the nozzle shape of the die. However, when the acrylic rubber is extruded in a sheet shape by making the die shape into a substantially rectangular shape, it is preferable, since a dry rubber with less entrapment of air and larger specific gravity and excellent storage stability can be obtained.

The resin pressure in the die portion is not particularly limited, but when the resin pressure is usually in the range of 0.1 to 10 MPa, preferably 0.5 to 5 MPa, and more preferably 1 to 3 MPa, it is preferable, since air entrapment is small, and the productivity is excellent.

Screw-Type Extruder and Operating Conditions

The screw length (L) of the screw-type extruder to be used may be appropriately selected according to the purpose of use, but it is usually in the range of 3,000 to 15,000 mm, preferably 4,000 to 10,000 mm, more preferably 4,500 to 8,000 mm.

The screw diameter (D) of the screw-type extruder used may be appropriately selected according to the purpose of use, but it is usually in the range of 50 to 250 mm, preferably 100 to 200 mm, more preferably 120 to 160 mm.

The ratio (L / D) of the screw length (L) to the screw diameter (D) of the screw-type extruder used is not particularly limited, but when it is usually in the range of 10 to 100, preferably 20 to 80, more preferably 30 to 60, particularly preferably 40 to 50, it is preferable, since the water content can be less than 1% by weight without lowering the molecular weight of the dry rubber or causing burns.

The rotation speed (N) of the screw-type extruder used may be appropriately selected according to various conditions, but when it is usually in the range of 10 to 1,000 rpm, preferably 50 to 750 rpm, more preferably 100 to 500 rpm, and most preferably 120 to 300 rpm, it is preferable, since the water content and the gel amount of the acrylic rubber can be efficiently reduced.

The extrusion rate (Q) of the screw-type extruder used is not particularly limited, but is usually in the range of 100 to 1,500 kg/hr, preferably 300 to 1,200 kg/hr, more preferably 400 to 1,000 kg/hr, most preferably 500 to 800 kg/hr.

The ratio (Q / N) of the extrusion rate (Q) and the number of revolutions (N) of the screw-type extruder used is not particularly limited, but it is usually in the range of 2 to 10, preferably 3 to 8, and more preferably 4 to 6.

Dry Rubber

The shape of the dry rubber extruded from the screw-type extruder is not particularly limited, and examples thereof include a crumb shape, a powder shape, a rod shape, and a sheet shape, and among these, the sheet shape is particularly preferable.

The temperature of the dry rubber extruded from the screw-type extruder is not particularly limited, but is usually in the range of 100 to 200°C, preferably 110 to 180°C, more preferably 120 to 160°C.

The water content of the dry rubber extruded from the screw-type extruder is less than 1% by weight, preferably 0.8% by weight or less, and more preferably 0.6% by weight or less.

Baling Process

The baling process after the dehydration and drying process by the screw-type extruder is a process of baling the extruded dry rubber. Baling of the dry rubber may be performed according to a conventional method, for example, it can be produced by putting the dry rubber in a baler and compressing it. The compression pressure of the baler may be appropriately selected according to the purpose of use, but it is usually in the range of 0.1 to 15 MPa, preferably 0.5 to 10 MPa, more preferably 1 to 5 MPa. The compression temperature is not particularly limited, but it is usually in the range of 10 to 80°C, preferably 20 to 60°C, more preferably 30 to 60°C. The compression time may be appropriately selected according to the purpose of use, but it is usually in the range of 1 to 100 seconds, preferably 2 to 50 seconds, more preferably 5 to 25 seconds.

In the present invention, the sheet-shaped dry rubber can be extruded from the screw-type extruder in the above-mentioned dehydration and drying process, cut as necessary, and then laminate and bale the sheet-shaped dry rubber.

The laminated and baled sheet-shaped dry rubber is preferable, since it is easy to produce and the bale contains few bubbles (large specific gravity), so that it is excellent in storage stability. Hereinafter, the mode is shown in which the sheet-shaped dry rubber is extruded from the screw-type extruder and then the sheet is laminated and baled.

The thickness of the sheet-shaped dry rubber extruded from the screw-type extruder is not particularly limited, but when it is usually in the range of 1 to 40 mm, preferably 2 to 35 mm, more preferably 3 to 30 mm, and most preferably 5 to 25 mm, it is preferable, since it has excellent workability and productivity. In particular, since the thermal conductivity of the sheet-shaped dry rubber is as low as 0.15 to 0.35 W/mK, in order to increase the cooling efficiency and to improve the productivity, the thickness of the sheet-shaped dry rubber is usually in the range of 1 to 30 mm, preferably 2 to 25 mm, more preferably 3 to 15 mm, and particularly preferably 4 to 12 mm.

The width of the sheet-shaped dry rubber extruded from the screw-type extruder is appropriately selected according to the purpose of use, but it is usually in the range of 300 to 1,200 mm, preferably 400 to 1,000 mm, more preferably 500 to 800 mm.

The temperature of the sheet-shaped dry rubber extruded from the screw-type extruder is not particularly limited, but it is usually in the range of 100 to 200°C, preferably 110 to 180°C, more preferably 120 to 160°C.

The complex viscosity ($[\eta]$ 100°C) at 100°C of the sheet-shaped dry rubber extruded from the screw-type extruder is not particularly limited, but when it is usually in the range of 1,500 to 6,000 Pa·s, preferably 2,000 to 5,000 Pa·s, more preferably 2,500 to 4,000 Pa·s, and most preferably 2,500 to 3,500 Pa·s, it is preferable, since the extrudability and shape retention as a sheet are highly well-balanced. This means that, when the value of the complex viscosity ($[\eta]$ 100°C) at 100°C is higher than the lower limit or higher, the extrudability can be more excellent, and when the value is lower than the upper limit or lower, collapse and breakage of the shape of the sheet-shaped dry rubber can be suppressed.

In the present invention, the sheet-shaped dry rubber extruded from the screw-type extruder is suitable for laminating and baling after cutting because the amount of air entrapped is small and the storage stability is excellent. The cutting of the sheet-shaped dry rubber is not particularly limited, but since the acrylic rubber of the acrylic rubber bale of the present invention has strong stickiness, it is preferable that the sheet-shaped dry rubber is cut after cooling the same in order to continuously cut without entrapping air.

The cutting temperature of the sheet-shaped dry rubber is not particularly limited, but when the temperature is usually 60°C or lower, preferably 55°C or lower, more preferably 50°C or lower, it is preferable, since the cutting property and the productivity are highly well-balanced. When the sheet-shaped dry rubber is cut in this range of temperature, amount of air entrapped is small, so that the storage stability of the acrylic bale can be highly improved.

The complex viscosity ($[\eta]$ 60°C) at 60°C of the sheet-shaped dry rubber is not particularly limited, but when it is usually in the range of 15,000 Pa·s or less, preferably 2,000 to 10,000 Pa·s, more preferably 2,500 to 7,000 Pa·s, and most preferably 2,700 to 5,500 Pa·s, it is preferable, since the cutting can be done continuously without entrapping air.

The ratio ($[\eta]$ 100°C / $[\eta]$ 60°C) of the complex viscosity ($[\eta]$ 100°C) at 100°C to the complex viscosity ($[\eta]$ 60°C) at 60°C of the sheet-shaped dry rubber is not particularly limited, but when it is usually in the range of 0.5 or more, preferably 0.5 to 0.98, more preferably 0.6 to 0.95, most preferably 0.75 to 0.93, it is preferable, since air entrapment is low, and cutting and productivity are highly well-balanced.

The method for cooling the sheet-shaped dry rubber is not particularly limited and may be left at room temperature. However, since the sheet-shaped dry rubber has a very low thermal conductivity of 0.15 to 0.35 W/mK, forced cooling such as an air-cooling method under ventilation or cooling, a water-spraying method for spraying water, or a dipping method for immersing in water is preferable for improving productivity, and the air cooling method under ventilation or cooling is particularly preferable.

By the air-cooling method for sheet-shaped dry rubbers, for example, the sheet-shaped dry rubber can be extruded from a screw-type extruder onto a conveyor such as a belt conveyor and conveyed while being cooled by blowing cold air, so that the sheet-shaped dry rubber can be cooled. The temperature of the cold air is not particularly limited, but is usually in the range of 0 to 25°C, preferably 5 to 25°C, more preferably 10 to 20°C. The length to be cooled is not particularly limited, but it is usually 5 to 500 m, preferably 10 to 200 m, more preferably 20 to 100 m. Although the cooling rate of the sheet-shaped dry rubber is not particularly limited, when it is usually in the range of 50°C/hr or higher, more preferably 100°C/hr or higher, more preferably 150°C/hr or higher, it is preferable, since it is particularly easy to cut.

The cutting length of the sheet-shaped dry rubber is not particularly limited and may be appropriately selected according to the size of the acrylic rubber bale to be produced, but it is usually in the range of 100 to 800 mm, preferably 200 to 500 mm, more preferably 250 to 450 mm.

The sheet-shaped dry rubber after cutting is laminated and baled. The lamination temperature of the sheet-shaped dry rubber is not particularly limited, but when it is usually 30°C or higher, preferably 35°C or higher, and more preferably 40°C or higher, it is preferable, since air entrapped during lamination can be released. The number of laminated layers may be appropriately selected according to the size or weight of the acrylic rubber bale.

The acrylic rubber bale of the present invention thus obtained is excellent in operability and storage stability as compared with crumb-shaped acrylic rubber, and the acrylic rubber bale can be used by putting into a mixer such as a Banbury mixer or a roll as it is or after being cut into a required amount.

<Rubber Mixture>

The rubber mixture of the present invention is characterized by that it is produced by mixing the acrylic rubber bale with a filler and a cross-linking agent.

The filler is not particularly limited, but examples thereof include a reinforcing filler and a non-reinforcing filler, and the reinforcing filler is preferable.

Examples of the reinforcing filler include: carbon black such as furnace black, acetylene black, thermal black, channel black and graphite; silica such as wet silica, dry silica and colloidal silica; and the like. Examples of non-reinforcing fillers include quartz powder, diatomaceous earth, zinc oxide, basic magnesium carbonate, activated calcium carbonate, magnesium silicate, aluminum silicate, titanium dioxide, talc, aluminum sulfate, calcium sulfate, barium sulfate, and the like.

These fillers can be used alone or in combination of two or more, and the compounding amount thereof, which is appropriately selected within a range that does not degrade the effects of the present invention, is usually in the range of 1 to 200 parts by weight, preferably 10 to 150 parts by weight, more preferably 20 to 100 parts by weight, with respect to 100 parts by weight of the acrylic rubber bale.

The cross-linking agent may be appropriately selected depending on the type and application of the reactive group contained in the acrylic rubber constituting the acrylic rubber bale, and it is not particularly limited as long as it can cross-link the acrylic rubber bale. Conventionally known cross-linking agents such as, for example, polyvalent amine compounds such as diamine compounds and carbonates thereof; sulfur compounds; sulfur donors; triazine thiol compounds; polyvalent epoxy compounds; organic carboxylic acid ammonium salts; organic peroxides; polyvalent carboxylic acids; a quaternary onium salt; an imidazole compound; an isocyanuric acid compound; an organic peroxide; a triazine compound; and the like can be used. Among these, polyvalent amine compounds, carboxylic acid ammonium salts, dithiocarbamic acid metal salts and triazine thiol compounds are preferable, and hexamethylenediamine carbamate, 2,2'-bis [4-(4-aminophenoxy) phenyl] propane, ammonium benzoate and 2,4,6-trimercapto-1,3,5-triazine are particularly preferable.

When the acrylic rubber bale to be used includes a carboxyl group-containing acrylic rubber, it is preferable to use a polyvalent amine compound and its carbonate as a cross-linking agent. Examples of the polyvalent amine compound include: aliphatic polyvalent amine compounds such as hexamethylenediamine, hexamethylenediamine carbamate and N,N'-dicinnamylidene-1,6-hexanediamine; aromatic polyvalent amine compound such as 4,4'-methylenedianiline, p-phenylenediamine, m-phenylenediamine, 4,4'-diaminodiphenyl ether, 3,4'-diaminodiphenyl ether, 4,4'-(m-phenylenediisopropylidene) dianiline, 4,4'-(p- phenylenediisopropylidene) dianiline, 2,2'-bis [4-(4-aminophenoxy) phenyl] propane, 4,4'-diaminobenzanilide, 4,4'-bis (4-aminophenoxy) biphenyl, m- xylylenediamine, p-xylylenediamine, 1,3,5-benzenetriamine, and the like; and the like. Among these, hexamethylenediamine carbamate, 2,2'-bis [4-(4-aminophenoxy) phenyl] propane, and the like are preferable.

When the acrylic rubber bale to be used is constituted by an epoxy group-containing acrylic rubber, examples of cross-linking agent include: an aliphatic polyvalent amine compound such as hexamethylenediamine or hexamethylenediamine carbamate, and a carbonate thereof; aromatic polyvalent amine compound such as 4,4'-methylenedianiline; carboxylic acid ammonium salts such as ammonium benzoate and ammonium adipate; metal salts of dithiocarbamic acid such as zinc dimethyldithiocarbamate; polycarboxylic acids such as tetradecanedioic acid; quaternary onium salts such as cetyltrimethylammonium bromide; an imidazole compound such as 2-methylimidazole; isocyanuric acid compounds such as ammonium isocyanurate; and the like. Among these, carboxylic acid ammonium salts and metal salts of dithiocarbamic acid are preferable, and ammonium benzoate is more preferable.

When the acrylic rubber bale to be used is constituted by a halogen atomcontaining acrylic rubber, it is preferable to use sulfur, a sulfur donor, or a triazine thiol compound as the cross-linking agent. Examples of the sulfur donor include dipentamethylene thiuram hexasulfide, triethyl thiuram disulfide and the like. Examples of the triazine compound include 6-trimercapto-s-triazine, 2-anilino-4,6-dithiol-s-triazine, 1-dibutylamino-3,5-dimercaptotriazine, 2-dibutylamino-4, 6-dithiol-s-triazine, 1-phenylamino-3,5-dimercaptotriazine, 2,4,6-trimercapto-1,3,5-triazine, 1-hexylamino-3,5-dimercaptotriazine, and the like. Among these, 2,4,6-trimercapto-1,3,5-triazine is preferable.

These cross-linking agents may be used alone or in combination of two or more, and the compounding amount thereof with respect to 100 parts by weight of acrylic rubber bale is usually in the range of 0.001 to 20 parts by weight, preferably 0.1 to 10 parts by weight, more preferably 0.1 to 5 parts by weight. By setting the compounding amount of the cross-linking agent to be in this range, it is possible to make the rubber elasticity sufficient while making the mechanical strength as the rubber cross-linked product excellent, which is preferable.

The rubber mixture of the present invention may contain other rubber components than the above acrylic rubber bale, if necessary.

The other rubber component used as necessary is not particularly limited, and examples thereof include natural rubber, polybutadiene rubber, polyisoprene rubber, styrene-butadiene rubber, acrylonitrile-butadiene rubber, silicone rubber, fluororubber, olefin elastomers, styrene elastomers, vinyl chloride elastomers, polyester elastomers, polyamide elastomers, polyurethane elastomers and polysiloxane elastomers. The shape of the other rubber component is not particularly limited, and may be, for example, a crumb shape, a sheet shape, or a bale shape.

These other rubber components may be used alone or in combination of two or more. The amount of these other rubber components to be used is appropriately selected within a range that does not degrade the effects of the present invention.

The rubber mixture of the present invention may contain an anti-aging agent, if necessary. The type of anti-aging agent is not particularly limited, but examples thereof include: phenolic anti-aging agents such as 2,6-di-t-butyl-4-methylphenol, 2,6-di-t-butylphenol, butylhydroxyanisole, 2,6-di-t-butyl-$\alpha$-dimethylamino-p-cresol, octadecyl- 3-(3,5-di-t-butyl-4-hydroxyphenyl) propionate, styrenated phenol, 2,2'-methylene-bis (6-$\alpha$-methyl-benzyl-p-cresol), 4,4'-methylenebis (2,6-di-t-butylphenol), 2,2'-methylene-bis (4-methyl-6-t-butylphenol), 2,4-bis [(octylthio) methyl]-6-methylphenol, 2,2'-thiobis-(4-methyl-6-t-butylphenol), 4,4'-thiobis-(6-t-butyl-o-cresol), 2,6-di-t-butyl-4-(4,6-bis (octylthio)-1,3,5-triazin-2-ylamino) phenol; phosphite type anti-aging agents such as tris (nonylphenyl) phosphite, diphenylisodecylphosphite, tetraphenyldipropyleneglycol diphosphite; sulfur ester-based anti-aging agents such as dilauryl thiodipropionate; amine-based anti-aging agents such as phenyl-$\alpha$-naphthylamine, phenyl-$\beta$-naphthylamine, p-(p-toluenesulfonylamide)-diphe-nylamine, 4,4'-($\alpha,\alpha$-dimethylbenzyl) diphenylamine, N,N-diphenyl-p-phenylenediamine, N-isopropyl-N'-phenyl-p-phenylenediamine and butyraldehyde-aniline condensates; imidazole anti-aging agents such as 2-mercaptobenzimidazole; quinoline anti-aging agents such as 6-ethoxy-2,2,4-trimethyl-1,2-dihydroquinoline; hydroquinone anti-aging agents such as 2,5-di-(t-amyl) hydroquinone; and the like. Among these, amine-based anti-aging agents are particularly preferable.

These anti-aging agents can be used alone or in combination of two or more, and the compounding amount thereof with respect to 100 parts by weight of the acrylic rubber bale is in the range of 0.01 to 15 parts by weight, preferably 0.1 to 10 parts by weight, more preferably 1 to 5 parts by weight.

The rubber mixture of the present invention contains the above-mentioned acrylic rubber bale of the present invention, a filler, a cross-linking agent, and, if necessary, other rubber components and an anti-aging agent, and further optionally contain other additives, if necessary, commonly used in the art, for example, a crosslinking aid, a cross-linking accelerator, a cross-linking retarder, a silane coupling agent, a plasticizer, a processing aid, lubricants, pigments, colorants, antistatic agents, foaming agents and the like. These other compounding agents may be used alone or in combination of two or more, and the compounding amount thereof is appropriately selected within a range that does not degrade the effects of the present invention.

<Method for Producing Rubber Mixture>

Examples of the method for producing the rubber mixture according to the present invention include a method of mixing the acrylic rubber bale according to the present invention with a filler, a cross-linking agent, and the above-mentioned other rubber component which can be optionally contained, an anti-aging agent and other compounding agents. For mixing, any means conventionally used in the field of rubber processing, such as an open roll, a Banbury mixer, various kneaders, and the like can be used. This means that the acrylic rubber bale, the filler, the cross-linking agent and the like can be directly mixed, preferably directly kneaded, by using these mixers.

In that case, as the acrylic rubber bale, the obtained bale may be used as it is or may be divided (cut, or the like) when used.

The mixing procedure of each component is not particularly limited, but for example, a two-stage mixing is preferable, in which components that are difficult to react or decompose with heat are sufficiently mixed, and then thereafter, a cross-linking agent, which is a component that easily reacts or decomposes with heat, and the like are mixed for a short at a temperature that reaction and decomposition does not occur. To be specific, it is preferable to mix the acrylic rubber bale and the filler in the first stage and then mix the cross-linking agent in the second stage. The other rubber components and the antiaging agent are usually mixed in the first stage, the crosslinking accelerator is mixed in the second stage, and the other compounding agents may be appropriately selected.

The Mooney viscosity (MLI +4, 100°c; compound Mooney) of the rubber mixture of the present invention thus obtained is not particularly limited, but is usually in the range of 10 to 150, preferably 20 to 100, more preferably 25 to 80.

<Rubber Cross-linked Product>

The rubber cross-linked product of the present invention is obtained by crosslinking the above rubber mixture.

The rubber cross-linked product of the present invention can be produced by molding the rubber mixture of the present invention by a molding machine applicable for a desired shape, for example, an extruder, an injection molding machine, a compressor and a roll, occurring a cross-linking reaction by heating, and fixing the shape as a rubber cross-linked product. **In** this case, the molding may be performed in advance and then cross-linked, or the molding and the cross-linking may be performed simultaneously. The molding temperature is usually 10 to 200°C, preferably 25 to 150°C. The cross-linking temperature is usually 100 to 250°C, preferably 130 to 220°C, more preferably 150 to 200°C. The cross-linking time is usually 0.1 minutes to 10 hours, preferably 1 minute to 5 hours. As a heating method, a method used for cross-linking rubber such as press heating, steam heating, oven heating, and hot air heating may be appropriately selected.

The rubber cross-linked product of the present invention may be further heated for secondary cross-linking depending on the shape and size of the rubber cross-linked product. The secondary cross-linking varies depending on the heating method, the cross-linking temperature, the shape, and the like, but the secondary cross-linking is preferably performed for 1 to 48 hours. The heating method and heating temperature may be appropriately selected.

The rubber cross-linked product of the present invention is preferably used as: for example, sealing materials such as an O-ring, a packing, a diaphragm, an oil seal, a shaft seal, a bearing seal, a mechanical seal, a well head seal, an electric/electronic device seal, an air compression device; various kinds of gaskets such as a rocker cover gasket mounted on a connecting portion between a cylinder block and a cylinder head, an oil pan gasket mounted on a connecting portion between an oil pan and a cylinder head or a transmission case, a gasket for a fuel cell separator mounted between a pair of housings sandwiching a unit cell including a positive electrode, an electrolyte plate and a negative electrode, a gasket for hard disk drive top covers; cushioning materials, antivibration materials; electric wire coating materials; industrial belts; tubes and hoses; sheets; and the like.

The rubber cross-linked product of the present invention is also used as an extrusion-molded product and mold cross-linked product used for automobiles, for example, fuel oil system hoses for fuel tank such as a fuel hose, a filler neck hose, a vent hose, a vapor hose, an oil hose, and the like; air system hoses such as a turbo air hose, a mission control hose, and the like; various hoses such as a radiator hose, a heater hose, a brake hose, an air conditioner hose, and the like.

<Device Configuration used for Production of Acrylic Rubber Bale>

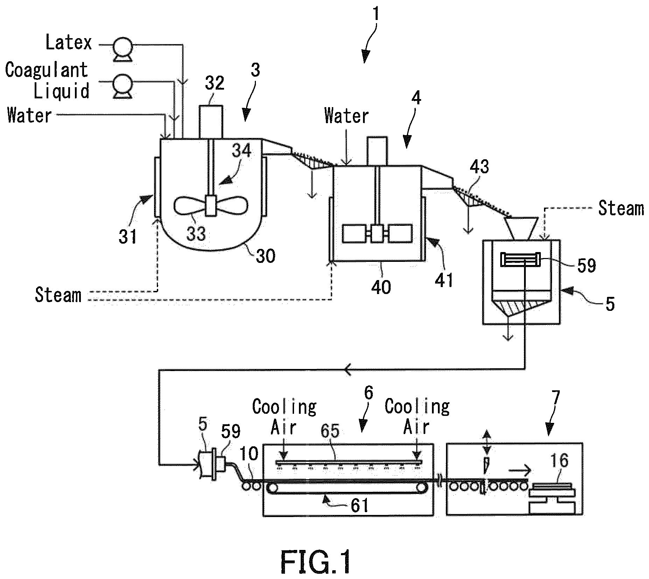

Next, a device configuration used for manufacturing the acrylic rubber bale according to one embodiment of the present invention will be described. FIG. 1 is a diagram schematically showing an example of an acrylic rubber production system having a device configuration used for producing an acrylic rubber bale according to one embodiment of the present invention. For producing the acrylic rubber of the present invention, for example, the acrylic rubber production system 1 shown in FIG. 1 can be used.

The acrylic rubber production system shown in FIG. 1 is composed of an emulsion polymerization reactor (not shown), a coagulation device 3, a washing device 4, a drainer 43, a screw-type extruder 5, a cooling device 6, and a baling device 7.

The emulsion polymerization reactor is configured to perform the above-mentioned emulsion polymerization process. Although not shown in FIG. 1, this emulsion polymerization reactor has, for example, a polymerization reaction tank, a temperature control unit for controlling a reaction temperature, and a stirring device provided with a motor and a stirring blade. In the emulsion polymerization reactor, water and an emulsifier are mixed with a monomer component for forming an acrylic rubber, and the mixture is emulsified while being appropriately stirred by a stirrer, and emulsion polymerization is performed in the presence of a polymerization catalyst, thereby to obtain emulsion polymerization liquid. The emulsion polymerization reactor may be a batch type, a semi-batch type or a continuous type, and may be a tanktype reactor or a tube-type reactor.

The coagulation device 3 shown in FIG. 1 is configured to perform the process related to the coagulation process described above. As schematically shown in FIG. 1, the coagulation device 3 includes, for example, a stirring tank 30, a heating unit 31 that heats the inside of the stirring tank 30, a temperature control unit (not shown) that controls the temperature inside the stirring tank 30, a stirring device 34 having a motor 32 and a stirring blade 33, and a drive control unit (not shown) that controls the rotation number and rotation speed of the stirring blade 33. In the coagulation device 3, hydrous crumbs can be produced by bringing the emulsion polymerization liquid obtained in the emulsion polymerization reactor into contact with the coagulant liquid as a coagulant to coagulate the emulsion polymerization liquid.

In the coagulation device 3, for example, the contact between the emulsion polymerization liquid and coagulant liquid is performed by adding the emulsion polymerization liquid to the stirred coagulant liquid. This means that the stirring tank 30 of the coagulation device 3 is filled with the coagulant liquid, and the emulsion polymerization liquid is added to and brought into contact with the coagulant liquid to coagulate the emulsion polymerization liquid, thereby generating hydrous crumbs.

The heating unit 31 of the coagulation device 3 is configured to heat the coagulant liquid with which the stirring tank 30 is filled. Further, the temperature control unit of the coagulation device 3 is configured to control the temperature inside the stirring tank 30 by controlling the heating operation by the heating unit 31 while monitoring the temperature inside the stirring tank 30 measured by a thermometer. The coagulant liquid in the stirring tank 30 is controlled by the temperature control unit to be usually in the range of 40°C or higher, preferably 40 to 90°C, more preferably 50 to 80°C.

The stirring device 34 of the coagulation device 3 is configured to stir the coagulant liquid filled in the stirring tank 30. Specifically, the stirring device 34 includes a motor 32 that generates rotational power, and a stirring blade 33 that extends in a direction perpendicular to the rotation axis of the motor 32. The stirring blade 33 can flow the coagulant liquid by rotating about the rotation axis by the rotational power of the motor 32 in the coagulant liquid filled in the stirring tank 30. The shape and size of the stirring blade 33, the number of installations, and the like are not particularly limited.

The drive control unit of the coagulation device 3 is configured to control the rotational drive of the motor 32 of the stirring device 34 and set the rotation speed of the stirring blades 33 of the stirring device 34 to predetermined values. The stirring speed of the stirring blade 33 is controlled by the drive controller so that the stirring speed of the coagulant liquid is controlled to be, for example, usually in the range of 100 rpm or more, preferably 200 to 1,000 rpm, more preferably 300 to 900 rpm, and particularly preferably 400 to 800 rpm. The rotation of the stirring blade 33 is controlled by the drive controller so that the peripheral speed of the coagulant liquid is usually 0.5 m/s or higher, preferably 1 m/s or higher, more preferably 1.5 m/s or higher, particularly preferably 2 m/s or higher, most preferably 2.5 m/s or higher. Further, the rotation of the stirring blade 33 is controlled by the drive control unit so that the upper limit of the peripheral speed of the coagulant liquid is usually 50 m/s or lower, preferably 30 m/s or lower, more preferably 25 m/s or lower, and most preferably 20 m/s or lower.

The washing device 4 shown in FIG. 1 is configured to perform the above-described washing process. As schematically shown in FIG. 1, the washing device 4 includes, for example, a washing tank 40, a heating unit 41 that heats the inside of the washing tank 40, and a temperature control unit (not shown) that controls the temperature inside the washing tank 40. In the washing device 4, by mixing the hydrous crumbs produced in the coagulation device 3 with a large amount of water for washing, the ash content in the finally obtained acrylic rubber bale can be effectively reduced.

The heating unit 41 of the washing device 4 is configured to heat the inside of the washing tank 40. In addition, the temperature control unit of the washing device 4 controls the temperature inside the washing tank 40 by controlling the heating operation by the heating unit 41 while monitoring the temperature inside the washing tank 40 measured by the thermometer. As described above, the temperature of the washing water in the washing tank 40 is controlled to be usually in the range of 40°C or higher, preferably 40 to 100°C, more preferably 50 to 90°C, and most preferably 60 to 80°C.

The hydrous crumb washed in the washing device 4 is supplied to the screw-type extruder 5 which performs a dehydration process and a drying process. At this time, it is preferable that the hydrous crumb after washing is supplied to the screw-type extruder 5 through a drainer 43 capable of separating free water. For the drainer 43, for example, a wire mesh, a screen, an electric sifter, or the like can be used.

Further, when the hydrous crumb after washing is supplied to the screw-type extruder 5, the temperature of the hydrous crumb is preferably 40°C or higher, more preferably 60°C or higher. For example, by setting the temperature of water used for washing in the washing device 4 to 60°C or higher (for example, 70°C), so that the temperature of the hydrous crumb when supplied to the screw-type extruder 5 is maintained at 60°C or higher. Otherwise, the hydrous crumb may be heated to a temperature of 40°C or higher, preferably 60°C or higher when being conveyed from the washing device 4 to the screw-type extruder 5. This makes it possible to effectively perform the dehydration process and the drying process, which are the subsequent processes, and to significantly reduce the water content of the finally obtained dry rubber.

The screw-type extruder 5 shown in FIG. 1 is configured to perform the processes related to the aforementioned dehydration process and the drying process. Although a screw-type extruder 5 is illustrated in FIG. 1 as a suitable example, a centrifuge, a squeezer, or the like may be used as a dehydrator that performs the process related to the dehydration process, and a hot air dryer, a reduced pressure dryer, an expander dryer, a kneader type dryer or the like may be used as a dryer that performs the process related to the drying process.

The screw-type extruder 5 is configured to mold the dry rubber obtained through the dehydration process and the drying process into a predetermined shape and to discharge the dry rubber. Specifically, the screw-type extruder 5 is provided with: a dehydration barrel section 53 having a function as a dehydrator to dehydrate the hydrous crumb washed by the washing device 4; a drying barrel section 54 having a function as a dryer for drying the hydrous crumb; and a die 59 having a molding function to mold a hydrous crumb on the downstream side of the screw-type extruder 5.

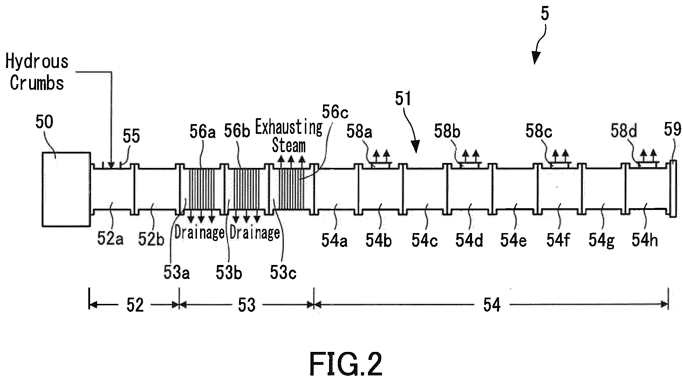

The configuration of the screw-type extruder 5 will be described below with reference to FIG. 2. FIG. 2 shows the configuration of a specific suitable example as the screw-type extruder 5 shown in FIG. 1. By the screw-type extruder 5, the above-described dehydration process and drying process can be suitably performed.

The screw-type extruder 5 shown in FIG. 2 is a twin-screw-type extruder/dryer including a pair of screws (not shown) in a barrel section 51. The screw-type extruder 5 has a drive unit 50 that rotationally drives a pair of screws in the barrel section 51. The drive unit 50 is attached to an upstream end (left end in FIG. 2) of the barrel section 51. Further, the screw-type extruder 5 has a die 59 at a downstream end (right end in FIG. 2) of the barrel section 51.

The barrel section 51 has a supply barrel section 52, a dehydration barrel section 53, and a drying barrel section 54 from the upstream side to the downstream side (from the left side to the right side in FIG. 2).

The supply barrel section 52 is composed of two supply barrels, which are a first supply barrel 52a and a second supply barrel 52b.

Further, the dehydration barrel section 53 is composed of three dehydration barrels, which are a first dehydration barrel 53a, a second dehydration barrel 53b and a third dehydration barrel 53c.

The drying barrel section 54 includes eight drying barrels, which are a first drying barrel 54a, a second drying barrel 54b, a third drying barrel 54c, a fourth drying barrel 54d, a fifth drying barrel 54e, a sixth drying barrel 54f, a seventh drying barrel 54g, and an eighth drying barrel 54h.

Thus, the barrel section 51 is configured by connecting the 13 divided barrels 52a to 52b, 53a to 53c, and 54a to 54h from the upstream side to the downstream side.

Further, the screw-type extruder 5 has a heating means (not shown) to individually heat each of the barrels 52a to 52b, 53a to 53c, and 54a to 54h. The hydrous crumbs in each of the barrels 52a to 52b, 53a to 53c, and 54a to 54h are heated to a predetermined temperature by the heating means. The heating means is provided with a number corresponding to each barrel 52a to 52b, 53a to 53c, and 54a to 54h. As such a heating means, for example, a configuration in which high temperature steam is supplied from a steam supply means to a steam distribution jacket formed in each barrel 52a to 52b, 53a to 53c, and 54a to 54h is adopted, but the configuration is not limited to this. Further, the screw-type extruder 5 has a temperature control means (not shown) to control the set temperature of each heating means corresponding to each barrel 52a to 52b, 53a to 53c, and 54a to 54h.

It should be noted that the number of supply barrels, dehydration barrels, and drying barrels constituting the barrel sections 52, 53, and 54 of the barrel section 51 is not limited to the embodiment shown in FIG.2, but the number can be set in accordance with the water content of the hydrous crumbs of the acrylic rubber to be dried and the like.

For example, the number of supply barrels installed in the supply barrel section 52 is, for example, 1 to 3. Further, the number of dehydration barrels installed in the dehydration barrel section 53 is preferably, for example, 2 to 10, and more preferably 3 to 6, since the hydrous crumbs of the sticky acrylic rubber can be efficiently dehydrated. Further, the number of the drying barrels installed in the drying barrel section 54 is, for example, preferably 2 to 10, and more preferably 3 to 8.

The pair of screws in the barrel section 51 is rotationally driven by a driving means such as a motor stored in the driving unit 50. The pair of screws, extending from the upstream side to the downstream side in the barrel section 51, is rotationally driven so that the pair of screws can convey the hydrous crumbs to the downstream side while mixing the hydrous crumbs supplied to the supply barrel section 52. The pair of screws is preferably a biaxial meshing type in which peaks and troughs are meshed with each other, whereby the dehydration efficiency and drying efficiency of the hydrous crumbs can be increased.

Further, the rotation direction of the pair of screws may be the same direction or different directions, but from the viewpoint of self-cleaning performance, a type that rotates in the same direction is preferable. The screw shape of the pair of screws is not particularly limited and may be any shape required for each barrel section 52, 53, 54.

The supply barrel section 52 is an area for supplying the hydrous crumbs into the barrel section 51. The first supply barrel 52a of the supply barrel section 52 has a feed port 55 provided therewith for supplying the hydrous crumbs into the barrel section 51.

The dehydration barrel section 53 is an area for separating and discharging a liquid (serum water) containing a coagulant from hydrous crumbs.

The first to third dehydration barrels 53a to 53c, constituting the dehydration barrel section 53, have dehydration slits 56a, 56b and 56c for discharging the moisture of the hydrous crumbs to the outside, respectively. A plurality of dehydrating slits 56a, 56b, 56c are formed in each of the dehydration barrels 53a to 53c.

The slit width of each dehydration slit 56a, 56b, 56c, that is, the opening may be appropriately selected according to the use conditions, and is usually 0.01 to 5 mm. From the viewpoint that the loss of the hydrous crumb is small, and the dehydration of hydrous crumb can be efficiently performed, it is preferably 0.1 to 1 mm, and more preferably 0.2 to 0.6 mm.

There are two cases to remove water from the hydrous crumbs in the dehydration barrels 53a to 53c of the dehydration barrel section 53, which are a case to remove water in a liquid form from each of the dehydration slits 56a, 56b and 56c and a case to remove water in a vapor state. In the dehydration barrel section 53 of the present embodiment, for distinction of the two cases, the case of removing water in a liquid state is defined as drainage, and the case of removing in a vapor state is defined as steam exhausting.

In the dehydration barrel section 53, it is preferable to use drainage and steam exhausting in combination, since it is possible to efficiently reduce the water content of the sticky acrylic rubber. In the dehydration barrel section 53, which of the first to third dehydration barrels 53a to 53c is to be used for drainage or discharging steam may be appropriately set according to the purpose of use, but it is preferable to increase the number of dehydration barrels for drainage in a case of reducing ash content in usually produced acrylic rubber. In that case, for example, as shown in FIG. 2, the first and second dehydration barrels 53a and 53b on the upstream side perform drainage, and the third dehydration barrel 53c on the downstream side performs steam exhausting. Further, for example, when the dehydration barrel section 53 has four dehydration barrels, a mode in which, for example, three upstream dehydration barrels perform drainage, and one downstream dehydration barrel performs steam exhausting can be considered. On the other hand, in the case of reducing the water content, it is advantageous to increase the number of dehydration barrels for steam exhausting.

The set temperature of the dehydration barrel section 53 is usually in the range of 60 to 150°C, preferably 70 to 140°C, and more preferably 80 to 130°C, as described in the dehydration/drying process above. The set temperature of the dehydration barrel for dehydration in the drainage state is usually in the range of 60 to 120°C, preferably 70 to 110°C, more preferably 80 to 100°C, and the set temperature of the dehydration barrel for dehydration in the steam exhausting state is usually in the range of 100 to 150°C, preferably 105 to 140°C, more preferably 110 to 130°C.

The drying barrel section 54 is an area for drying the hydrous crumbs after dehydration under reduced pressure. Out of the first to eighth drying barrels 54a to 54h forming the drying barrel section 54, the second drying barrel 54b, the fourth drying barrel 54d, the sixth drying barrel 54f, and the eighth drying barrel 54h are provided with vent ports 58a, 58b, 58c, 58d for deaeration, respectively. A vent pipe (not shown) is connected to each of the vent ports 58a, 58b, 58c, 58d.

A vacuum pump (not shown) is connected to the end of each vent pipe, and the inside of the drying barrel section 54 is depressurized to a predetermined pressure by the operation of these vacuum pumps. The screw-type extruder 5 has pressure control means (not shown) for controlling the operation of the vacuum pumps and controlling the degree of pressure reduction in the drying barrel section 54.

The degree of pressure reduction in the drying barrel section 54 may be appropriately selected, but as described above, it is usually set to 1 to 50 kPa, preferably 2 to 30 kPa, and more preferably 3 to 20 kPa.

The set temperature in the drying barrel section 54 may be appropriately selected, but as described above, it is usually set to 100 to 250°C, preferably 110 to 200°C, and more preferably 120 to 180°C.

In each of the drying barrels 54a to 54h forming the drying barrel section 54, the temperature thereof may be set to an approximate value of all the drying barrels 54a to 54h or different values, but it is preferable to set the temperature of the downstream side (the side of the die 59) higher than the temperature of the upstream side (the side of the dehydration barrel section 53), since the drying efficiency is improved.

The die 59 is a mold arranged at the downstream end of the barrel section 51 and has a discharge port having a predetermined nozzle shape. The acrylic rubber dried in the drying barrel section 54 passes through the discharge port of the die 59 to be extruded into a shape corresponding to the predetermined nozzle shape. The acrylic rubber passing through the die 59 is formed into various shapes such as a granular shape, a columnar shape, a round bar shape, and a sheet shape depending on the nozzle shape of the die 59. For example, by forming the discharge port of the die 59 into a substantially rectangular shape, the acrylic rubber can be extruded into a sheet shape. A breaker plate or a wire net may or may not be provided between the screw and the die 59.

According to the screw-type extruder 5 according to the present embodiment, the hydrous crumbs of the raw material acrylic rubber are extruded into a sheet-shaped dry rubber in a following way.

The hydrous crumbs of acrylic rubber obtained through the washing process is supplied to the supply barrel section 52 from the feed port 55. The hydrous crumb supplied to the supply barrel section 52 is sent from the supply barrel section 52 to the dehydration barrel section 53 by rotation of a pair of screws in the barrel section 51. **In** the dehydration barrel section 53, as described above, the water contained in the hydrous crumbs is drained or the steam is discharged from the dehydration slits 56a, 56b, and 56c provided in the first to third dehydration barrels 53a to 53c, respectively, so that the hydrous crumbs are dehydrated.

The hydrous crumbs dehydrated in the dehydration barrel section 53 is sent to the drying barrel section 54 by rotation of a pair of screws in the barrel section 51. The hydrous crumbs sent to the drying barrel section 54 are plasticized and mixed to form a melt, which is conveyed to the downstream side while being heated. Then, the water contained in the melt of the acrylic rubber is vaporized, and the water (vapor) is discharged to the outside through vent pipes (not shown) connected to the vent ports 58a, 58b, 58c, 58d.

By passing through the drying barrel section 54 as described above, the hydrous crumbs are dried to become a melt of acrylic rubber, so that the acrylic rubber is supplied to the die 59 by the rotation of a pair of screws in the barrel section 51, and is extruded from the die 59 as a sheet-shaped dry rubber.

Hereinafter, an example of operating conditions of the screw-type extruder 5 according to the present embodiment will be described.

The rotation speed (N) of the pair of screws in the barrel section 51 may be appropriately selected according to various conditions, and is usually 10 to 1,000 rpm, and since the water content and the gel amount of the acrylic rubber bale can be efficiently reduced, the rotation speed (N) of the pair of screws in the barrel section 51 is preferably 50 to 750 rpm, more preferably 100 to 500 rpm, and most preferably 120 to 300 rpm.

The extrusion rate (Q) of the acrylic rubber is not particularly limited, but it is usually 100 to 1,500 kg/hr, preferably 300 to 1,200 kg/hr, more preferably 400 to 1,000 kg/hr, and most preferably 500 to 800 kg/hr.

The ratio (Q / N) of the extrusion amount (Q) of the acrylic rubber to the rotation speed (N) of the screw is not particularly limited, but it is usually 1 to 20, preferably 2 to 10, and more preferably 3 to 8, and particularly preferably 4 to 6.

The cooling device 6 shown in FIG. 1 is configured to cool the dry rubber obtained through the dehydration process using a dehydrator and the drying process using a dryer. As a cooling method by the cooling device 6, various methods including an air cooling method in which air is blown or under cooling, a water spraying method in which water is sprayed, a dipping method in which water is immersed, and the like can be adopted. Otherwise, the dry rubber may be cooled by leaving it at room temperature.

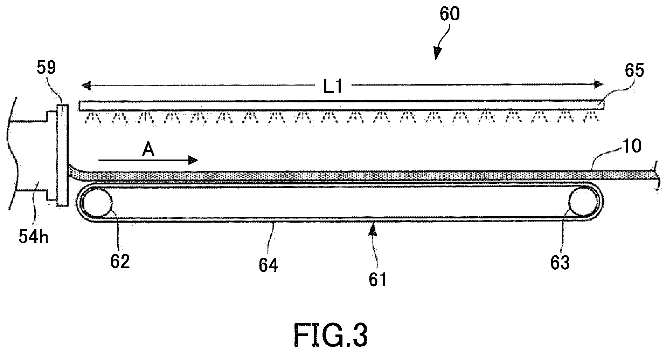

As described above, the dry rubber discharged from the screw-type extruder 5 is extruded into various shapes such as a granular shape, a columnar shape, a round bar shape and a sheet shape depending on the nozzle shape of the die 59. Hereinafter, as an example of the cooling device 6, a transport-type cooling device 60 that cools the sheet-shaped dry rubber 10 will be described with reference to FIG. 3.

FIG. 3 shows a configuration of a conveyor-type cooling device 60 suitable as the cooling device 6 shown in FIG. 1. The conveyor-type cooling device 60 shown in FIG. 3 is configured to cool the sheet-shaped dry rubber 10 discharged from the discharge port of the die 59 of the screw-type extruder 5 by an air cooling method while conveying the sheet-type dry rubber 10. By using this conveyor-type cooling device 60, the sheet-shaped dry rubber 10 discharged from the screw-type extruder 5 can be suitably cooled.

The conveyor-type cooling device 60 shown in FIG. 3 is used, for example, directly connected to the die 59 of the screw-type extruder 5 shown in FIG. 2 or installed close to the die 59.

The conveyor-type cooling device 60 is provided with a conveyor 61 that conveys the sheet-shaped dry rubber 10 discharged from the die 59 of the screw-type extruder 5 in the direction of arrow A in FIG. 3, and a cooling means 65 for blowing cool air to the sheet-shaped dry rubber 10 on the conveyor 61.

The conveyor 61 has rollers 62 and 63, and a conveyor belt 64 that is wound around these rollers 62 and 63 and on which the sheet-shaped dry rubber 10 is placed. The conveyor 61 is configured to continuously convey the sheet-shaped dry rubber 10 discharged from the die 59 of the screw-type extruder 5 onto the conveyor belt 64 to the downstream side (right side in FIG. 3).

The cooling means 65 is not particularly limited, but examples thereof include a cooling means that has a structure capable of blowing cooling air sent from a cooling air generation means (not shown) onto the surface of the sheet-shaped dry rubber 10 on the conveyor belt 64.

The length L1 of the conveyor 61 and the cooling means 65 (the length of the portion to which the cooling air can be blown) of the transport cooling device 60 is not particularly limited, but is, for example, 10 to 100 m, preferably 20 to 50 m. Further, the conveyance speed of the sheet-shaped dry rubber 10 in the conveyor-type cooling device 60, which can be appropriately adjusted in accordance with the length L1 of the conveyor 61 and the cooling means 65, the discharge speed of the sheet-shaped dry rubber 10 discharged from the die 59 of the screw-type extruder 5, a target cooling speed, a target cooling time, and the like, is, for example, 10 to 100 m/hr, and more preferably 15 to 70 m/hr.

According to the conveyor-type cooling device 60 shown in FIG. 3, the sheet-shaped dry rubber 10 discharged from the die 59 of the screw-type extruder 5 is conveyed by the conveyor 61 while the sheet-shaped dry rubber 10 is cooled by the cooling means 65 by blowing the cooling air to the sheet-shaped dry rubber 10.

It should be noted that the conveyor-type cooling device 60 is not particularly limited to the configuration including one conveyor 61 and one cooling means 65 as shown in FIG. 3, but it may be configured to be provided with two or more conveyors 61 and two or more cooling means 65 corresponding thereto. In that case, the total length of each of the two or more conveyors 61 and the cooling means 65 may be set within the above range.

The baling device 7 shown in FIG. 1 is configured to process a dry rubber extruded from a screw-type extruder 5 and cooled by a cooling device 6 to produce a bale, which is shaped in a chunk of a block. As described above, the screw-type extruder 5 can extrude dry rubber into various shapes such as granular, columnar, round bar-shaped, and sheet-shape, and the baling device 7 is configured to bale the dry rubber formed in various shapes. The weight and shape of the acrylic rubber bale produced by the baling device 7 are not particularly limited, but, for example, a substantially rectangular parallelepiped acrylic rubber bale weighing about 20 kg is produced.

The baling device 7 may include, for example, a baler, and an acrylic rubber bale may be produced by compressing cooled dry rubber with the baler.

Further, when the sheet-shaped dry rubber 10 is produced by the screw-type extruder 5, an acrylic rubber bale made by laminating the sheet-shaped dry rubbers 10 may be produced. For example, a cutting mechanism for cutting the sheet-shaped dry rubber 10 may be provided in the baling device 7 provided on the downstream side of the conveyor-type cooling device 60 shown in FIG. 3. Specifically, for example, the cutting mechanism of the baling device 7 is configured to continuously cuts the cooled sheet-shaped dry rubber 10 at predetermined intervals and processes it into a cut sheet-shaped dry rubber 16 having a predetermined size. By laminating a plurality of cut sheet-shaped dry rubbers 16 cut into a predetermined size by the cutting mechanism, an acrylic rubber bale in which the cut sheet-shaped dry rubbers 16 are laminated can be produced.

When producing an acrylic rubber bale in which the cut sheet dry rubbers 16 are laminated, it is preferable to laminate the cut sheet dry rubbers 16 at 40°C or higher, for example. By laminating the cut sheet dry rubbers 16 at 40°C or higher, good air release is realized by further cooling and compression by its own weight.

[EXAMPLES]

The present invention will be described more specifically below with reference to Examples, and Comparative Examples. In addition, "part", "%" and "ratio" in each example are based on weight unless otherwise specified. Various physical properties were evaluated according to the following methods.

[Monomer Composition]

Regarding the monomer composition in the acrylic rubber, the monomer composition of each monomer unit in the acrylic rubber was confirmed by H-NMR, and existence of the activity of the reactive group remained in the acrylic rubber and the content of the reactive group were confirmed by the following test method.

Further, the content ratio of each monomer unit in the acrylic rubber was calculated from the amount of each monomer used in the polymerization reaction and the polymerization conversion rate. Specifically, the content ratio of each monomer unit was regarded as the same as the amount of each monomer used, since the polymerization reaction was an emulsion polymerization reaction, and the polymerization conversion rate was about 100% in which no unreacted monomer could be confirmed.

[Reactive Group Content]

The content of the reactive group of the acrylic rubber was measured by measuring the content in the acrylic rubber bale by the following method:

(1) The amount of carboxyl group was calculated by dissolving acrylic rubber bale in acetone and performing potentiometric titration with a potassium hydroxide solution.
(2) The amount of epoxy group was calculated by dissolving acrylic rubber bale in methyl ethyl ketone, adding a specified amount of hydrochloric acid thereto to react with epoxy groups, and titrating the amount of residual hydrochloric acid with potassium hydroxide.
(3) The amount of chlorine was calculated by completely burning the acrylic rubber bale in a combustion flask, absorbing the generated chlorine in water, and titrating with silver nitrate.

[Ash Content]

The ash content (%) contained in the acrylic rubber bale was measured according to JIS K6228 A method.

[Ash Component Content]

The amount of each component (ppm) in the ash of the acrylic rubber bale was measured by XRF using a ZSX Primus (manufactured by Rigaku Corporation) by pressing the ash collected during the above-mentioned ash content measurement onto a titration filter paper having a diameter of 20 mm.

[Gel Amount]

The gel amount (%) of the acrylic rubber bale is the amount of insoluble matter in methyl ethyl ketone, and was determined by the following method:

About 0.2 g of acrylic rubber bale was weighed (X g), immersed in 100 ml of methyl ethyl ketone, left at room temperature for 24 hours, and then a filtrate in which only the rubber component soluble in methyl ethyl ketone was dissolved, was obtained by filtering out the insoluble matter in methyl ethyl ketone using an 80 mesh wire net. The dry solid content (Y g) obtained by evaporating and drying and coagulating the filtrate was weighed, and the gel amount was calculated by the following formula.

$$\text{Gel amount } (\%) = 100 \times (X\text{-}Y) / X$$

[Specific Gravity]

The specific gravity of the acrylic rubber bale was measured according to JIS K6268 cross-linked rubber-method A of density measurement.

[Glass Transition Temperature (Tg)]

The glass transition temperature (Tg) of the acrylic rubber constituting the acrylic rubber bale was measured using a differential scanning calorimeter (DSC, product name "X-DSC7000", manufactured by Hitachi High-Tech Science Corporation).

[pH]

The pH of the acrylic rubber bale was measured with a pH electrode after dissolving 6 g ($\pm$ 0.05 g) of acrylic rubber in 100 g of tetrahydrofuran and adding 2.0 ml of distilled water to confirm that the acrylic rubber was completely dissolved.

[Water Content]

The water content (%) of the acrylic rubber bale was measured according to JIS K6238-1: Oven A (volatile content measurement) method.

[Molecular Weight and Molecular Weight Distribution]

The weight average molecular weight (Mw) and the molecular weight distribution (Mz / Mw) of the acrylic rubber are an absolute molecular weight and an absolute molecular weight distribution, respectively, measured by the GPC-MALS method in which a solution in which 0.05 mol / L of lithium chloride and 37% concentrated hydrochloric acid with a concentration of 0.01% are added to dimethylformamide is used as a solvent. To be specific, a multi-angle laser light scattering photometer (MALS) and a refractive index detector (RI) were incorporated into a GPC (Gel Permeation Chromatography) device, and the light scattering intensity and the difference in the refractive index of the molecular chain solution size-separated were measured by the GPC device by following the elution time, so that the molecular weight of the solute and its content rate were sequentially calculated and determined. Measurement conditions and measurement methods of the GPC device are as follows:

> Column: TSKgel $\alpha$-M 2 pieces ($\varphi$7.8 mm$\times$30 cm, manufactured by Tosoh Corporation)
> Column Temperature: 40°C
> Flow Rate: 0.8 ml/mm
> Sample Preparation: 5 ml of solvent was added to 10 mg of the sample, and the mixture was gently stirred at room temperature (dissolution was visually confirmed).
> Thereafter, filtration was performed using a 0.5 $\mu$m filter.

[Complex Viscosity]

The complex viscosity $\eta$ at each temperature of the acrylic rubber bale was determined by measuring the temperature dispersion (40 to 120°C) at a strain of 473% and 1 Hz using a dynamic viscoelasticity measuring device "Rubber Process Analyzer RPA-2000" (manufactured by Alpha Technology Co., Ltd.). Here, of the above-mentioned dynamic viscoelasticities, the dynamic viscoelasticity at 60°C is defined as the complex viscosity $\eta$ (60°C), and the dynamic viscoelasticity at 100°C is defined as the complex viscosity $\eta$ (100°C), and the values $\eta$ (100°C) / $\eta$ (60°C) and $\eta$ (60°C) / $\eta$ (100°C) were calculated.

[Mooney Viscosity (ML1+4,100°C)]

The Mooney viscosity (ML1+4,100°C) of the acrylic rubber bale was measured according to the JIS K6300 uncross-linked rubber physical test method.

[Evaluation of Variation in Gel Amount]

The variation of the gel amount of the rubber sample was evaluated by measuring the gel amount at 20 points arbitrarily selected from 20 parts (20 kg) of the rubber sample and evaluating the variation based on the following criteria:

> ◎: The average value of the measured gel amount at 20 points was calculated, and all the measured 20 points were within the range of the average value $\pm$3.
> ∘: The average value of the measured gel amount at 20 points was calculated, and all the measured 20 points were within the range of the average value $\pm$5 (at least one of the 20 measured points was out of the range of the average value $\pm$3. However, all 20 points were within the range of the average value $\pm$5)
> ✕: The average value of the measured gel amount at 20 points was calculated, and at least one of the 20 measured points was out of the range of the average value $\pm$5.

[Processability Evaluation]

The processability of the rubber sample was measured by adding the rubber sample to a Banbury mixer heated to 50°C, kneading for 1 minute, and then adding the compounding agent A having the composition of the rubber mixture shown in Table 1 to obtain the first-stage rubber mixture. The time until the first-stage rubber mixture was integrated to show the maximum torque value, that is, BIT (Black Incorporation Time) was measured and evaluated by an index with Comparative Example 1 being 100 (the smaller the index, the better the processability).

[Water Resistance Evaluation]

Regarding the water resistance of the rubber sample, the cross-linked product of the rubber sample was immersed in a distilled water at a temperature of 85°C for 100 hours in accordance with JIS K6258 to perform an immersion test, and the volume change rate before and after immersion was calculated according to the following formula: The evaluation was performed by an index with Comparative Example 1 being 100 (the smaller the index, the more excellent in the water resistance). Volume change rate before and after immersion (%) = ((test piece volume after immersion - test piece volume before immersion) / test piece volume before immersion) $\times$ 100.

[Normal Physical Property Evaluation]

The normal physical properties of the rubber sample were evaluated according to JIS K6251 by measuring the breaking strength, 100% tensile stress and breaking elongation of the rubber cross-linked product of the rubber sample, and were evaluated based on the following criteria:

(1) The breaking strength was evaluated as ◎, good, for 10 MPa or more and as ×, unacceptable, for less than 10 MPa.

(2) For 100% tensile stress, 5 MPa or more was evaluated as ◎ and less than 5 MPa was evaluated as ×.

(3) The breaking elongation was evaluated as ◎ for 150% or more and as × for less than 150%.

[Example 1]

46 parts of pure water, 74.5 parts of ethyl acrylate, 17 parts of n-butyl acrylate, 7 parts of methoxyethyl acrylate, and 1.5 parts of mono-n-butyl fumarate, and 1.8 parts of octyloxydioxyethylene phosphate sodium salt as an emulsifier were mixed in a mixing container provided with a homomixer, and stirred, thereby to obtain a monomer emulsion.

Subsequently, 170 parts of pure water and 3 parts of the monomer emulsion obtained as mentioned above were put into a polymerization reaction tank provided with a thermometer and a stirring device, and cooled to 12°C under a nitrogen stream. Subsequently, the rest of the monomer emulsion, 0.00033 part of ferrous sulfate, 0.264 part of sodium ascorbate, and 0.22 part of potassium persulfate were continuously dropped into the polymerization reaction tank over 3 hours. Thereafter, the reaction was continued while maintaining the temperature in the polymerization reaction tank at 23°C, and upon the confirmation that the polymerization conversion rate reached about 100%, hydroquinone as a polymerization terminator was added to terminate the polymerization reaction, and the emulsion polymerization liquid was obtained.

In the coagulation tank equipped with a thermometer and a stirring device, 2% magnesium sulfate aqueous solution (coagulant liquid) was heated to 80°C and vigorously stirred (rotation speed of 600 rpm, peripheral speed of 3.1 m/s). The emulsion polymerization liquid added with the above-mentioned anti-aging agent and heated to 80°C was continuously added to the 2% magnesium sulfate aqueous solution, so that the polymer was coagulated, and then filtrated, thereby to obtain hydrous crumbs.

Next, 194 parts of hot water (70°C) was added to the coagulation tank and stirred for 15 minutes, and then water was discharged, and again 194 parts of hot water (70°C) was added and stirred for 15 minutes to wash the hydrous crumbs. The washed hydrous crumbs (hydrous crumbs temperature 65°C) were supplied to a screw-type extruder, dehydrated, dried, and then extruded as sheet-shaped dry rubber having a width of 300 mm and a thickness of 10 mm. Then, the sheet-shaped dry rubber was cooled at a cooling rate of 200°C/hr by using a conveyance-type cooling device directly connected to the screw-type extruder.

The screw-type extruder used in Example 1 is constituted by one supply barrel, three dehydration barrels (first to third dehydration barrels), and five drying barrels (first to fifth drying barrels). The first and second dehydration barrels drain water, and the third dehydrating barrel exhausts steam. The operating conditions of the screw-type extruder were as follows.

Water Content:

- Water content of hydrous crumbs after drainage in the second dehydration barrel: 20%
- Water content of hydrous crumbs after steam exhausting in the third dehydration barrel: 10%
- Water content of hydrous crumbs after drying in the fifth drying barrel: 0.4%

Rubber Temperature:

- Temperature of hydrous crumbs supplied to the first supply barrel: 65°C

- Temperature of rubber discharged from the screw-type extruder: 140°C

Set Temperature of each Barrels:

- First dehydration barrel: 90°C
- Second dehydration barrel: 100°C
- Third dehydration barrel: 120°C
- First drying barrel : 120°C
- Second drying barrel : 130°C
- Third drying barrel : 140°C
- Fourth drying barrel : 160°C
- Fifth drying barrel : 180°C

Operating Conditions:

- Diameter of the screw in the barrel section (D): 132mm

- Total length (L) of the screw in the barrel section: 4620 mm

- L/D: 35

- Rotation speed of the screw in the barrel section: 135 rpm

- Extrusion rate of the rubber from the die: 700 kg/hr

- Die resin pressure: 2 MPa

The extruded sheet-shaped dry rubber was cooled to 50°C, cut by a cutter, and laminated so as to be 20 parts (20 kg) before the temperature becomes 40°C or lower to obtain an acrylic rubber bale (A). Reactive group content, ash content, ash component content, specific gravity, gel amount, glass transition temperature (Tg), pH, anti-aging agent content, water content, molecular weight, molecular weight distribution, and complex viscosity of the obtained acrylic rubber bale (A) were measured, and their results are shown in Table 2. And the variation of the gel amount of the acrylic rubber bale (A) was evaluated and is shown in Table 2.

Next, using a Banbury mixer, 100 parts of the acrylic rubber bale (A) and the Compounding Agent A of "Composition 1" shown in Table 1 were added and mixed at 50°C for 5 minutes. BIT at this time was measured and the processability of the acrylic rubber bale (A) was evaluated, and the results are shown in Table 2.

Then, the obtained mixture was transferred to a roll at 50°C, and the Compounding Agent B of "Composition 1" shown in Table 1 was compounded and mixed to obtain a rubber mixture.

[Table 1]

| Composition (Parts) | | Composition 1 | Composition 2 | Composition 3 | Composition 4 |
|---|---|---|---|---|---|
| Compounding Agent A | Polymer / Bale | 100 | 100 | 100 | 100 |
| | SEAST3 (HAF) ※1 | 60 | 60 | 60 | 60 |
| | Stearic Acid | 1 | 1 | 1 | 1 |
| | Ester Wax | 1 | 1 | 1 | 1 |
| | NOCRAC CD ※2 | 2 | 2 | 2 | 2 |
| Compounding Agent B | Hexamethylenediamine carbamate | 0.5 | 0.6 | - | - |
| | Rhenogran®XLA-60 ※3 (Synthetic mixture of active amine and retarder) | 2 | 2 | - | - |
| | Ammonium benzoate | - | - | 1.5 | - |
| | NS soap (Semi-hardened beef tallow fatty acid soda soap) | - | - | - | 3 |
| | NONSOUL SN-1 (Main component of stearic acid) | - | - | - | 0.5 |
| | SULFAX® PMC (Sulfur content : 97.5%) | - | - | - | 0.3 |

※1: SEAST3 (HAF) in the table is carbon black (made by Tokai Carbon Co., Ltd.).

※2: The Nocrac CD in the table is 4,4'-bis ($\alpha$, $\alpha$-dimethylbenzyl) diphenylamine : made by OUCHI SHINKO CHEMICAL INDUSTRIAL CO.,LTD.).

※3: Rhenogran® XLA-60 in the table is a vulcanization accelerator (made by LANXESS CO.,LTD.).

The obtained rubber mixture was placed in a mold having a length of 15 cm, a width of 15 cm, and a depth of 0.2 cm, and the obtained rubber mixture was primary cross-linked by pressing at 180°C for 10 minutes while applying a pressure of 10 MPa, and the obtained primary cross-linked product was secondary cross-linked by heating in a gear-type oven at 180°C for 2 hours to obtain a sheet-shaped rubber cross-linked product. Then, a test piece of 3 cm × 2 cm × 0.2 cm was cut out from the obtained sheet-shaped rubber cross-linked product, and the water resistance and normal physical properties were evaluated, and the results are shown in Table 2.

[Example 2]

An acrylic rubber bale (B) was obtained in the same manner as in Example 1 except that the monomer component was changed to 4.5 parts of ethyl acrylate, 64.5 parts of n-butyl acrylate, 29.5 parts of methoxyethyl acrylate, and 1.5 parts of mono-n-butyl fumarate, and the emulsifier was changed to nonylphenyloxyhexaoxyethylene phosphate sodium salt, and each property was evaluated. The results are shown in Table 2.

[Example 3]

An acrylic rubber bale (C) was obtained in the same manner as in Example 1 except that the monomer component was changed to 48.25 parts of ethyl acrylate, 50 parts of n-butyl acrylate, and 1.75 parts of mono-n-butyl fumarate, and the emulsifier was changed to tridecyloxyhexaoxyethylene phosphate sodium salt, and each property (Compounding Agent was changed to "Composition 2") was evaluated. The results are shown in Table 2.

[Example 4]

An acrylic rubber bale (D) was obtained in the same manner as in Example 3 except that the temperature of the first dehydration barrel of the screw-type extruder is changed to 100°C and the temperature of the second dehydration barrel is changed to 120°C so that the drainage is performed only in the first dehydration barrel, and the water content of the hydrous crumbs after the drainage in the first dehydration barrel was changed to 30%, and each property was evaluated. The results are shown in Table 2.

[Example 5]

An acrylic rubber bale (E) was obtained in the same manner as in Example 4 except that the monomer component was changed to 28 parts of ethyl acrylate, 38 parts of n-butyl acrylate, 27 parts of methoxyethyl acrylate, 5 parts of acrylonitrile, and 2 parts of allyl glycidyl ether, and each property (Compounding Agent was changed to "Composition 3") was evaluated. The results are shown in Table 2.

[Example 6]

An acrylic rubber bale (F) was obtained in the same manner as in Example 4 except that the monomer component was changed to 42.2 parts of ethyl acrylate, 35 parts of n-butyl acrylate, 20 parts of methoxyethyl acrylate, 1.5 parts of acrylonitrile, and 1.3 parts of chlorovinyl acetate, and each property (Compounding Agent was changed to "Composition 4") was evaluated. The results are shown in Table 2.

[Comparative Example 1]

In a mixing container provided with a homomixer, 46 parts of pure water, 42.2 parts of ethyl acrylate, 35 parts of n-butyl acrylate, 20 parts of methoxyethyl acrylate, 1.5 parts of acrylonitrile, and 1.3 parts of vinyl chloroacetate, and as emulsifiers, 0.709 parts of sodium lauryl sulfate and 1.82 parts of polyoxyethylene dodecyl ether (molecular weight 1,500) were put and were stirred to obtain a monomer emulsion.

Next, 170 parts of pure water and 3 parts of the monomer emulsion obtained above were put into a polymerization reaction tank equipped with a thermometer and a stirring device, and cooled to 12°C under a nitrogen stream. Then, the rest of the monomer emulsion, 0.00033 part of ferrous sulfate, 0.264 part of sodium ascorbate, and 0.22 part of potassium persulfate were continuously added dropwise to the polymerization reaction tank over 3 hours. Thereafter, allowed the reaction to continue with the temperature inside the polymerization reaction tank kept at 23°C, confirmed that the polymerization conversion rate reached about 100%, and terminated the polymerization reaction by adding hydroquinone as a polymerization terminator, thereby to obtain an emulsion polymerization liquid.

Subsequently, after heating the emulsion polymerization liquid added with the anti-aging agent to 80°C, 0.7% sodium sulfate aqueous solution (coagulant liquid) was continuously added to the emulsion polymerization liquid (rotation speed 100 rpm, peripheral speed 0.5 m/s), so that the polymer was coagulated, and then filtrated the coagulated polymer to obtain hydrous crumbs. 194 parts of industrial water was added to 100 parts of the hydrous crumbs thus obtained, and after stirred at 25°C for 5 minutes, then the hydrous crumbs were washed 4 times after draining water from the coagulation tank, and then 194 parts of a sulfuric acid aqueous solution of pH3 was added and stirred at 25°C for 5 minutes, thereafter water was drained from the coagulation tank, and acid washing was performed once, then 194 parts of pure water was added and pure water washing was performed once, and then dried by a warm air drier of 160°C, to obtain a crumb-shaped acrylic rubber (G) having a water content of 0.4% by weight. The properties of the obtained crumb-shaped acrylic rubber (G) were evaluated and are shown in Table 2.

[Table 2]

| | | Example 1 | Example 2 | Example 3 | Example 4 | Example 5 | Example 6 | Comparative Example 1 |
|---|---|---|---|---|---|---|---|---|
| Types of Acrylic Rubber Bale or Crumb | | (A) | (B) | (C) | (D) | (E) | (F) | (G) |
| | Reactive group type | Carboxyl Group | Carboxyl Group | Carboxyl Group | Carboxyl Group | Epoxy Group | Chlorine | Chlorine |
| | Reactive group content (%) | 0.31 | 0.31 | 0.35 | 0.34 | 0.37 | 0.27 | 0.27 |

(continued)

| Monomeric unit Composition of Acrylic Rubber (%) | | | | | | | |
|---|---|---|---|---|---|---|---|
| | Ethyl acrylate | 74.5 | 4.5 | 48.25 | 48.25 | 28 | 42.2 | 42.2 |
| | n-butyl acrylate | 17 | 64.5 | 50 | 50 | 38 | 35 | 35 |
| | Methoxyethyl acrylate | 7 | 29.5 | - | - | 27 | 20 | 20 |
| | Acrylonitrile | | - | - | - | 5 | 1.5 | 1.5 |
| | Mono-n-butyl fumarate | 1.5 | 1.5 | 1.75 | 1.75 | - | - | - |
| | Allyl glycidyl ether | | - | - | - | 2 | - | - |
| | Chlorovinyl acetate | | - | - | - | - | 1.3 | 1.3 |
| Emulsifier (Parts) | | | | | | | |
| | Octyloxydioxyetylene phosphate ester sodium salt | 1.8 | - | - | - | - | - | - |
| | Nonylphenyloxyhexaoxyethylene phosphate ester sodium salt | - | 1.8 | - | - | - | - | - |
| | Tridecyloxyhexaoxyethylene phosphate ester sodium salt | - | - | 1.8 | 1.8 | 1.8 | 1.8 | - |
| | Lauryl sulfate sodium salt | - | - | - | - | - | - | 0.709 |
| | Polyoxyethylene dodecyl ether | - | - | - | - | - | - | 1.82 |
| Coagulation Process | | | | | | | |
| | Coagulant | $MgSO_4$ | $MgSO_4$ | $MgSO_4$ | $MgSO_4$ | $MgSO_4$ | $MgSO_4$ | $Na_2SO_4$ |
| | Coagulant concentration (%) | 2 | 2 | 2 | 2 | 2 | 2 | 0.7 |
| | Method of addition※ | Lx ↓ | Lx ↓ | Lx ↓ | Lx ↓ | Lx ↓ | Lx ↓ | Coa ↓ |
| | Stirring speed (rpm) | 600 | 600 | 600 | 600 | 600 | 600 | 100 |
| | Peripheral speed (m/s) | 3.1 | 3.1 | 3.1 | 3.1 | 3.1 | 3.1 | 0.5 |
| Washing Process | | | | | | | |
| | Water temperature (°C) | 70 | 70 | 70 | 70 | 70 | 70 | 25 |
| | Number of washings | 2 | 2 | 2 | 2 | 2 | 2 | 4+1+1 |
| Dehydration Process | Yes | Yes | Yes | Yes | Yes | Yes | No |
| | Water content (%) after dehydration (drainage) | 20 | 20 | 20 | 30 | 30 | 30 | - |
| Drying process | Extruder | Extruder | Extruder | Extruder | Extruder | Extruder | Hot air drying |
| Product Shape | Bale | Bale | Bale | Bale | Bale | Bale | Crumb |

(continued)

| Ash Properties of Acrylic Rubber Bale or Crumb | | | | | | | | |
|---|---|---|---|---|---|---|---|---|
| | Ash Content (%) | 0.112 | 0.110 | 0.092 | 0.169 | 0.171 | 0.168 | 0.285 |
| | Ash Content | | | | | | | |
| | P (ppm) | 511 | 644 | 520 | 890 | 862 | 865 | 15 |
| | Mg (ppm) | 348 | 360 | 273 | 561 | 599 | 601 | 10 |
| | Na (ppm) | 66 | 44 | 28 | 99 | 76 | 66 | 1390 |
| | Ca (ppm) | 5 | 4 | 7 | 9 | 5 | 6 | 20 |
| | S (ppm) | | | 21 | 56 | 59 | 63 | 1200 |
| | Mg+P (% in ash) | 77 | 91 | 86 | 86 | 85 | 87 | 1 |
| | Mg/P (ratio) | 0.68 | 0.56 | 0.53 | 0.63 | 0.69 | 0.69 | 0.67 |
| Property Values of Acrylic Rubber Bale or Crumb | | | | | | | | |
| | Specific gravity | 1.138 | 1.142 | 1.178 | 1.1342 | 1.158 | 1.098 | 0.713 |
| | Gel amount (%) | 1.2 | 1.8 | 2.1 | 1.5 | 3.7 | 2.2 | 70.5 |
| | Tg (°C) | -20 | -39 | -28 | -28 | -25 | -28 | -29 |
| | pH | 4.7 | 5 | 4.5 | 4.8 | 5 | 4.8 | 3.1 |
| | Anti-aging agent content (%) | 0.95 | 0.96 | 0.96 | 0.96 | 0.95 | 0.96 | 0.94 |
| | Water content (%) | 0.4 | 0.4 | 0.4 | 0.3 | 0.3 | 0.4 | 0.4 |
| | Mw/1000 | 1610 | 1380 | 1450 | 1450 | 1410 | 1520 | 1480 |
| | Mz/Mw | 1.8 | 1.69 | 1.79 | 1.79 | 1.68 | 1.75 | 1.74 |
| | $\eta$ (100°C) (Pa·s) | 3053 | 3124 | 3150 | 3150 | 2989 | 3081 | 2990 |
| | $\eta$ (60°C) (Pa·s) | 3689 | 3360 | 3620 | 3620 | 3672 | 3520 | 3380 |
| | Viscosity ratio $\eta$ (100°C) / $\eta$ (60°C) | 0.83 | 0.93 | 0.87 | 0.87 | 0.84 | 0.88 | 0.86 |
| Property Evaluation of Acrylic Rubber Bale or Crumb | | | | | | | | |
| | Variability (Gel) | ◎ | ◎ | ◎ | ◎ | ◎ | ◎ | × |
| | Processability Test (50°C) BIT (index) | 22 | 21 | 23 | 28 | 26 | 26 | 100 |
| | Water Resistance Test (85°C × 100hr) Volume change rate (index) | 3 | 3 | 2 | 7 | 5 | 10 | 100 |
| | Normal Physical Property Evaluation | | | | | | | |
| | Breaking strength | ◎ | ◎ | ◎ | ◎ | ◎ | ◎ | ◎ |
| | 100% tensile stress | ◎ | ◎ | ◎ | ◎ | ◎ | ◎ | ◎ |
| | Breaking elongation | ◎ | ◎ | ◎ | ◎ | ◎ | ◎ | ◎ |

※ In the table, Lx ↓ indicates that the emulsion polymerization liquid was added to the coagulant liquid, and Coa ↓ indicates that the coagulant liquid was added to the emulsion polymerization liquid.

From Table 2, it can be understood that acrylic rubber bales (A) to (F) of the present invention, comprising an acrylic rubber mainly containing a (meth) acrylic acid ester having a weight average molecular weight (Mw) of 1,000,000 to 5,000,000 and a ratio (Mz/Mw) of a Z-average molecular weight (Mz) and a weight average molecular weight (Mw) is 1.3 or more, wherein an amount of gel insoluble in a methyl ethyl ketone is 50% by weight or less are highly improving the processability without impairing the normal physical properties including strength properties (Comparison between Examples 1 to 6 and Comparative Example 1).

From Table 2, it can be understood that the acrylic rubber bales (A) to (F) and the crumb-shaped acrylic rubber (G) produced under the conditions of Examples and Comparative Example of the present application are excellent in normal physical properties including the breaking strength, maintaining strength of the acrylic rubber bale of the present invention, and are excellent in the workability, since the weight average molecular weight (Mw) measured by the absolute molecular weights measured by GPC-MALS exceeded 1,000,000, and in addition, since the ratio (Mz/Mw) of the Z-average molecular weight (Mz) and the weight-average molecular weight (Mw) of the absolute molecular weight distribution focused on the high molecular weight region measured by GPC-MALS is much larger than 1.3 (Examples 1 to 6 and Comparative Example 1). However, from Table 2, it can be understood that the crumb-shaped acrylic rubber (G) shows a variation in gel amount and the processability and the water resistance are not sufficient, even though it is excellent in the normal physical properties including strength properties (Comparative Example 1).

Regarding the variation in the amount of gel insoluble in methyl ethyl ketone, the gel amount at 20 points arbitrarily selected was measured, and it was determined whether or not all the measured values at 20 points were included within the range of the average value ±3, or whether or not all the measured values at 20 points were included within the range of the average value ±5. It can be understood that the acrylic rubber bales (A) to (F) of the present invention are overwhelmingly superior to the crumb-shaped acrylic rubber (G) in variation, specifically, the variation in the amount of gel in the acrylic rubber bale is small (comparison between Examples 1 to 6 and Comparative Example 1). The amount of gel insoluble in methyl ethyl ketone directly affects the processability of Banbury and the like, and if the amount of gel insoluble in methyl ethyl ketone changes, it is not preferable, since the physical properties of the rubber mixture and the rubber cross-linked product will be deteriorated as a result of the variation. In contrast, the acrylic rubber bales (A) to (F) of the present invention is preferable, since it can provide a stable rubber mixture or rubber cross-linked product without variations in the amount of gel insoluble in methyl ethyl ketone.

Regarding processability, it can be understood that although the polymerization conversion rate of emulsion polymerization is increased in the present invention, in order to improve the strength properties, causing the amount of gel insoluble in the methyl ethyl ketone to be rapidly increased so that the processability of the acrylic rubber is deteriorated, the rubber was dried in the screw-type extruder to a substantially water-free state (water content less than 1%) and melted and kneaded, so that the gel insoluble in methyl ethyl ketone that rapidly increased disappeared, thereby making processability and strength of the acrylic rubber bale highly well-balanced (comparison between Examples 1 to 6 and Comparative Example 1).

Regarding water resistance, it can be understood from Table 2 that the acrylic rubber bales (A) to (F) of the present invention are overwhelmingly superior to the crumb-shaped acrylic rubber (G) (comparison between Examples 1 to 6 and Comparative Example 1). This teaches us that the ash content in acrylic rubber bale was reduced by squeezing out water from the hydrous crumbs to specific water content in the dehydration process, and that the ash remaining in the acrylic rubber bale in the case that phosphate ester salt is used as the emulsifier and magnesium salt is used as the coagulant has a large content of magnesium and phosphorus, and the both have a specific ratio, the water resistance of the acrylic rubber bales (A) to (F) are remarkably improved and the normal physical properties including strength properties and the processability are highly well-balanced, since the water resistance is hardly effected (Examples 1 to 6).

Further, from Table 2, it can be understood that the acrylic rubber bales (A) to (F) of the present invention and the crumb-shaped acrylic rubber (G) are significantly different in "specific gravity", but it was not easy to raise the specific gravity in a coagulation method or a hot air drying method to produce the crumb-shaped acrylic rubber (G). However, it can be understood that the amount of gel insoluble in methyl ethyl ketone which has increased in the emulsion polymerization to obtain high molecular weight in order to attain the technical solution of the present invention, can be eliminated by drying with the screw-type extruder, and that the acrylic rubber bale containing no air having a large specific gravity can be obtained by extruding the sheet-shaped dry rubber by the screw-type extruder and considering cutting and laminating conditions of the sheet-shaped dry rubber. The effect by the large specific gravity with little entrapment of air is not shown as it is different from the technical problem of the present application, but the storage stability was highly improved, and as a result, the acrylic rubber bales (A) to (F) of the present invention was excellent not only in the strength properties, processability, and water resistance, but also the storage stability was highly excellent.

Further, it can be understood from Table 2 that the acrylic rubber bales (A) to (F) having the amount of reactive groups, the specific gravity, the amount of gel, the glass transition temperature (Tg), the pH, the water content, the weight average molecular weight (Mw), the ratio (Mz/Mw) of the Z-average molecular weight (Mz) and the weight average molecular weight (Mw), the complex viscosity η(100°C) at 100°C, the complex viscosity η(60°C) at 60°C, the ratio of complex viscosities at 100°C and 60°C (η100°C / η 60°C) within a specific range are remarkably excellent in strength properties and processability, and are also excellent in variation of the amount of gel insoluble in methyl ethyl ketone and water resistance (Examples 1 to 6).

[Comparative Example 2]

A crumb-shaped acrylic rubber (H) was obtained in the same manner as in Comparative Example 1 except that 1.8 parts of tridecyloxyhexaoxyethylene phosphate sodium salt was used as the emulsifier and magnesium sulfate was used as the coagulant. The ash content of the crumb-shaped acrylic rubber (H) was measured to be much higher than 1%, and it was found out that when phosphate ester salt was used as an emulsifier and magnesium sulfate was used as a coagulant, the ash was not sufficiently removed only by washing. When the gel amount variation, processability, water resistance and normal physical properties of the crumb-like acrylic rubber (H) are evaluated, although excellent in normal physical properties including strength properties, it was inferior in gel amount variability and processability, and particularly inferior in water resistance, such as, gel amount variation "×", processability "100", water resistance "400", breaking strength "◎", 100% tensile stress "◎", and elongation at break "◎". On the other hand, it was also found out that the acrylic rubber bales (A) to (F) of the present invention produce hydrous crumbs which is easy to remove ash by washing and dehydration by employing a specific coagulation method, setting a specific coagulant concentration, and raising the stirring speed, and that the water resistance was greatly improved by significantly reducing the ash content by washing with hot water and then dehydrating.

[EXPLANATION OF REFERENCE NUMERALS]

    1 Acrylic Rubber Production System
    3 Coagulation Device
    4 Washing Device
    5 Screw-Type Extruder
    6 Cooling Device
    7 Baling Device

**Claims**

1. An acrylic rubber bale, comprising an acrylic rubber mainly containing a (meth) acrylic acid ester having a weight average molecular weight (Mw) of 1,000,000 to 5,000,000 and a ratio (Mz/Mw) of a Z-average molecular weight (Mz) and a weight average molecular weight (Mw) is 1.3 or more,
   wherein an amount of gel insoluble in methyl ethyl ketone is 50% by weight or less and wherein the amount of gel insoluble in methyl ethyl ketone was determined according to the method described in paragraph [292] of the description.

2. The acrylic rubber bale according to claim 1, wherein the amount of gel insoluble in methyl ethyl ketone is 20% by weight or less.

3. The acrylic rubber bale according to claim 1 or 2, wherein all of 20 values of the amount of gel insoluble in methyl ethyl ketone of the acrylic rubber bale measured at arbitrary 20 points fall within the range of (average value -5) to (average value +5) % by weight.

4. The acrylic rubber bale according to any one of claims 1 to 3, wherein a complex viscosity ([η] 60°C) at 60°C is 15,000 Pa·s or less and wherein the complex viscosity was determined according to the method disclosed in paragraph [299] of the description.

5. The acrylic rubber bale according to any one of claims 1 to 4, wherein a ratio ([η] 100°C / [η] 60°C) of a complex viscosity ([η] 100°C) at 100°C to a complex viscosity ([η] 60°C) at 60°C is 0.5 or more.

6. The acrylic rubber bale according to any one of claims 1 to 5, wherein a ratio ([η] 100°C / [η] 60°C) of a complex viscosity ([η] 100°C) at 100°C to a complex viscosity ([η] 60°C) at 60°C is 0.8 or more.

7. The acrylic rubber bale according to any one of claims 1 to 6, wherein a specific gravity is in the range of 0.7 to 1.5 and wherein the specific gravity was measured according to JIS K6268 cross-linked rubber-method A of density measurement.

8. The acrylic rubber bale according to any one of claims 1 to 7, wherein a specific gravity is in the range of 0.8 to 1.4.

9. The acrylic rubber bale according to any one of claims 1 to 8, wherein a pH is 6 or less.

10. The acrylic rubber bale according to any one of claims 1 to 9, wherein an ash content is 0.3% by weight or less and wherein the ash content was measured according to JIS K6228 A method.

11. The acrylic rubber bale according to any one of claims 1 to 10, wherein a content of at least one element selected from the group consisting of sodium, sulfur, calcium, magnesium, and phosphorus in an ash is 70% by weight or more and wherein the ash component content was determined according to the method disclosed in paragraph [291] of the description.

12. The acrylic rubber bale according to any one of claims 1 to 11, wherein a water content is less than 1% by weight and wherein the water content was measured according to JIS K62381 -1 : Ovent A (volatile content measurement) method.

13. The acrylic rubber bale according to any one of claims 1 to 12, a Mooney viscosity (ML1+4,100°C) of the acrylic rubber bale is in the range of 10 to 150 and wherein the Mooney viscosity (ML 1+4, 100°C) was measured according to the JIS K6300 uncross-linked rubber physical test method.

14. The acrylic rubber bale according to any one of claims 1 to 13, wherein the acrylic rubber is emulsion-polymerized using a phosphate ester salt or a sulfate ester salt as an emulsifier.

15. The acrylic rubber bale according to claim 14, wherein the emulsion-polymerized polymerization liquid is coagulated by using an alkali metal salt or a metal salt of group 2 of the periodic table as the coagulation liquid and dried.

16. The acrylic rubber bale according to any one of claims 1 to 15, wherein the acrylic rubber is melt-kneaded and dried after coagulation.

17. The acrylic rubber bale according to claim 16, wherein the melt-kneading and drying are performed in a state of substantially no water.

18. The acrylic rubber bale according to claim 16 or 17, wherein the melt-kneading and drying are performed under reduced pressure.

19. The acrylic rubber bale according to any one of claims 16 to 18, wherein the acrylic rubber is cooled at a cooling rate of 50 °C/hr or more after the melt-kneading and drying.

20. A method for producing an acrylic rubber bale according to any one of claims 1 to 13, the method comprising:

   an emulsion polymerization process to emulsify a monomer component mainly composed of a (meth) acrylic acid ester with water and an emulsifier, and to emulsion-polymerize the emulsified monomer component in the presence of a polymerization catalyst to a polymerization conversion rate of 90% by weight or more to obtain an emulsion polymerization liquid;
   a coagulation process to contact the obtained emulsion polymerization liquid with a coagulant liquid to generate hydrous crumbs;
   a washing process to wash the generated hydrous crumbs;
   a drying process to dry the washed hydrous crumbs to a water content of less than 1% by weight and then extrude the dry rubber;
   and a baling process to bale the extruded dry rubber;

   wherein the drying process is performed by using a screw-type extruder.

21. The method for producing an acrylic rubber bale according to claim 20, wherein a dehydration process to squeeze out water from the hydrous crumbs is further provided.

22. The method for producing an acrylic rubber bale according to claim 21, wherein hydrous crumbs are dehydrated to a water content of 1 to 40% by weight.

23. The method for producing an acrylic rubber bale according to claim 21 or 22, wherein the dehydration process and the drying process is performed by using a screw-type extruder provided with a dehydration barrel having a dehydration slit, a drying barrel under reduced pressure, and a die at the tip, to dehydrate the hydrous crumbs in the dehydration barrel to a water content to 1 to 40% by weight, and thereafter to dry the hydrous crumbs in the drying barrel to a water content of less than 1% by weight, and then to extrude a dry rubber from the die.

24. The method for producing an acrylic rubber bale according to any one of claims 20 to 23, wherein a temperature of the hydrous crumbs charged into the screw-type extruder is 40°C or higher.

25. The method for producing an acrylic rubber bale according to any one of claims 20 to 24, wherein a temperature of a drying barrel section of the screw-type extruder is in the range of 100 to 250°C.

26. The method for producing an acrylic rubber bale according to any one of claims 20 to 25, wherein a degree of pressure reduction of a drying barrel section of the screw-type extruder is in the range of 1 to 50 kPa.

27. The method for producing an acrylic rubber bale according to any one of claims 20 to 26, wherein a resin pressure of a die portion of the screw-type extruder is in the range of 0.1 to 10 MPa.

28. The method for producing an acrylic rubber bale according to any one of claims 20 to 27, wherein a ratio (Q/N) of an extrusion rate (Q) and a number of revolutions of the screw-type extruder is in the range of 1 to 20.

29. The method for producing an acrylic rubber bale according to any one of claims 20 to 28, wherein the dry rubber is sheet-shaped.

30. The method for producing an acrylic rubber bale according to claim 29, wherein baling of the dry rubber is laminating the sheet-shaped dry rubber.

31. A rubber mixture obtained by mixing the acrylic rubber bale according to any one of claims 1 to 19 with a filler and a cross-linking agent.

32. A method for producing a rubber mixture **characterized by** that the acrylic rubber bale according to any one of claims 1 to 19 is mixed with a filler and a cross-linking agent using a mixer.

33. A rubber cross-linked product obtained by cross-linking the rubber mixture according to claim 31.

**Patentansprüche**

1. Acrylkautschukballen, umfassend einen Acrylkautschuk, der hauptsächlich einen (Meth)acrylsäureester mit einem gewichtsmittleren Molekulargewicht (Mw) von 1.000.000 bis 5.000.000 enthält und ein Verhältnis (Mz/Mw) des Z-mittleren Molekulargewichts (Mz) und des gewichtsmittleren Molekulargewichts (Mw) von 1,3 oder mehr aufweist, wobei die Menge an in Methylethylketon unlöslichem Gel 50 Gew.-% oder weniger beträgt und wobei die Menge an in Methylethylketon unlöslichem Gel gemäß dem in Absatz [292] der Beschreibung beschriebenen Verfahren bestimmt wurde.

2. Acrylkautschukballen nach Anspruch 1, wobei die Menge an in Methylethylketon unlöslichem Gel 20 Gew.-% oder weniger beträgt.

3. Acrylkautschukballen gemäß Anspruch 1 oder 2, wobei alle 20 Werte der Menge an in Methylethylketon unlöslichem Gel des Acrylkautschukballens, gemessen an 20 beliebigen Punkten, im Bereich von (Durchschnittswert -5) bis (Durchschnittswert +5) Gew.-% liegen.

4. Acrylkautschukballen gemäß einem der Ansprüche 1 bis 3, wobei eine komplexe Viskosität ([η] 60 °C) bei 60 °C 15.000 Pa·s oder weniger beträgt und wobei die komplexe Viskosität gemäß dem in Absatz [299] der Beschreibung offenbarten Verfahren bestimmt wurde.

5. Acrylkautschukballen nach einem der Ansprüche 1 bis 4, wobei das Verhältnis ($[\eta]$ 100 °C / $[\eta]$ 60 °C) der komplexen Viskosität ($[\eta]$ 100 °C) bei 100°C zur komplexen Viskosität ($[\eta]$ 60 °C) bei 60 °C 0,5 oder mehr beträgt.

6. Acrylkautschukballen gemäß einem der Ansprüche 1 bis 5, wobei das Verhältnis ($[\eta]$ 100 °C / $[\eta]$ 60 °C) der komplexen Viskosität ($[\eta]$ 100 °C) bei 100°C zur komplexen Viskosität ($[\eta]$ 60 °C) bei 60 °C 0,8 oder mehr beträgt.

7. Acrylkautschukballen gemäß einem der Ansprüche 1 bis 6, wobei das spezifische Gewicht im Bereich von 0,7 bis 1,5 liegt und wobei das spezifische Gewicht gemäß JIS K6268, Methode A zur Dichtemessung von vernetztem Kautschuk, gemessen wurde.

8. Acrylkautschukballen gemäß einem der Ansprüche 1 bis 7, wobei das spezifische Gewicht im Bereich von 0,8 bis 1,4 liegt.

9. Acrylkautschukballen gemäß einem der Ansprüche 1 bis 8, wobei der pH-Wert 6 oder weniger beträgt.

10. Acrylkautschukballen gemäß einem der Ansprüche 1 bis 9, wobei der Aschegehalt 0,3 Gew.-% oder weniger beträgt und wobei der Aschegehalt gemäß JIS K6228 A-Methode gemessen wurde.

11. Acrylkautschukballen gemäß einem der Ansprüche 1 bis 10, wobei der Gehalt mindestens eines Elements, ausgewählt aus der Gruppe bestehend aus Natrium, Schwefel, Calcium, Magnesium und Phosphor, in einer Asche 70 Gew.-% oder mehr beträgt und wobei der Gehalt der Aschekomponente gemäß dem in Absatz [291] der Beschreibung offenbarten Verfahren bestimmt wurde.

12. Acrylkautschukballen gemäß einem der Ansprüche 1 bis 11, wobei der Wassergehalt weniger als 1 Gew.-% beträgt und wobei der Wassergehalt gemäß JIS K62381-1: Ovent A (Messung des Gehalts an flüchtigen Bestandteilen) gemessen wurde.

13. Acrylkautschukballen gemäß einem der Ansprüche 1 bis 12, wobei die Mooney-Viskosität (ML1+4, 100 °C) des Acrylkautschukballens im Bereich von 10 bis 150 liegt und wobei die Mooney-Viskosität (ML 1+4, 100 °C) gemäß dem physikalischen Prüfverfahren für unvernetzten Kautschuk nach JIS K6300 gemessen wurde.

14. Acrylkautschukballen gemäß einem der Ansprüche 1 bis 13, wobei der Acrylkautschuk unter Verwendung eines Phosphatestersalzes oder eines Sulfatestersalzes als Emulgator emulsionspolymerisiert wird.

15. Acrylkautschukballen gemäß Anspruch 14, wobei die emulsionspolymerisierte Polymerisationsflüssigkeit unter Verwendung eines Alkalimetallsalzes oder eines Metallsalzes der Gruppe 2 des Periodensystems als Koagulationsflüssigkeit koaguliert und getrocknet wird.

16. Acrylkautschukballen gemäß einem der Ansprüche 1 bis 15, wobei der Acrylkautschuk nach der Koagulation schmelzgeknetet und getrocknet wird.

17. Acrylkautschukballen nach Anspruch 16, wobei das Schmelzkneten und Trocknen in einem Zustand durchgeführt werden, in dem im Wesentlichen kein Wasser vorhanden ist.

18. Acrylkautschukballen nach Anspruch 16 oder 17, wobei das Schmelzkneten und Trocknen unter vermindertem Druck durchgeführt werden.

19. Acrylkautschukballen gemäß einem der Ansprüche 16 bis 18, wobei der Acrylkautschuk nach dem Schmelzkneten und Trocknen mit einer Kühlgeschwindigkeit von 50 °C/h oder mehr gekühlt wird.

20. Verfahren zur Herstellung eines Acrylkautschukballens gemäß einem der Ansprüche 1 bis 13, wobei das Verfahren umfasst:

ein Emulsionspolymerisationsverfahren zum Emulgieren einer Monomerkomponente, die hauptsächlich aus einem (Meth)acrylsäureester besteht, mit Wasser und einem Emulgator und zum Emulsionspolymerisieren der emulgierten Monomerkomponente in Gegenwart eines Polymerisationskatalysators bis zu einer Polymerisationsumwandlungsrate von 90 Gew.-% oder mehr, um eine Emulsionspolymerisationsflüssigkeit zu erhalten; einem Koagulationsverfahren zum Inkontaktbringen der erhaltenen Emulsionspolymerisationsflüssigkeit mit einer Koagulationsflüssigkeit, um wasserhaltige Krümel zu erzeugen;
ein Waschverfahren zum Waschen der erzeugten wasserhaltigen Krümel;
ein Trocknungsverfahren zum Trocknen der gewaschenen wasserhaltigen Krümel auf einen Wassergehalt von weniger als 1 Gew.-% und anschließendes Extrudieren des trockenen Kautschuks;
und einen Pressvorgang, um den extrudierten trockenen Gummi zu pressen;

wobei der Trocknungsprozess unter Verwendung eines Schneckenextruders durchgeführt wird.

21. Verfahren zur Herstellung eines Acrylkautschukballens gemäß Anspruch 20, wobei ein Dehydratisierungsprozess zum Auspressen von Wasser aus den wasserhaltigen Krümeln vorgesehen ist.

22. Verfahren zur Herstellung eines Acrylkautschukballens gemäß Anspruch 21, wobei die wasserhaltigen Krümel auf einen Wassergehalt von 1 bis 40 Gew.-% dehydriert werden.

23. Verfahren zur Herstellung eines Acrylkautschukballens gemäß Anspruch 21 oder 22, wobei der Entwässerungsprozess und der Trocknungsprozess unter Verwendung eines Schneckenextruders durchgeführt werden, der mit einem Entwässerungszylinder mit einem Entwässerungsschlitz, einem Trocknungszylinder unter vermindertem Druck und einer Düse an der Spitze versehen ist, um die wasserhaltigen Krümel im Entwässerungszylinder auf einen Wassergehalt von 1 bis 40 Gew.-% zu entwässern, und anschließend die wasserhaltigen Krümel im Trocknungszylinder auf einen Wassergehalt von weniger als 1 Gew.-% zu trocknen und dann einen trockenen Kautschuk aus der Düse zu extrudieren.

24. Verfahren zur Herstellung eines Acrylkautschukballens gemäß einem der Ansprüche 20 bis 23, wobei die Temperatur der in den Schneckenextruder eingefüllten wasserhaltigen Krümel 40 °C oder höher ist.

25. Verfahren zur Herstellung eines Acrylkautschukballens gemäß einem der Ansprüche 20 bis 24, wobei die Temperatur eines Trocknungszylinderabschnitts des Schneckenextruders im Bereich von 100 bis 250 °C liegt.

26. Verfahren zur Herstellung eines Acrylkautschukballens gemäß einem der Ansprüche 20 bis 25, wobei der Druckreduktionsgrad eines Trocknungszylinderabschnitts des Schneckenextruders im Bereich von 1 bis 50 kPa liegt.

27. Verfahren zur Herstellung eines Acrylkautschukballens gemäß einem der Ansprüche 20 bis 26, wobei ein Harzdruck eines Düsenabschnitts des Schneckenextruders im Bereich von 0,1 bis 10 MPa liegt.

28. Verfahren zur Herstellung eines Acrylkautschukballens gemäß einem der Ansprüche 20 bis 27, wobei ein Verhältnis (Q/N) einer Extrusionsrate (Q) und einer Drehzahl des Schneckenextruders im Bereich von 1 bis 20 liegt.

29. Verfahren zur Herstellung eines Acrylkautschukballens gemäß einem der Ansprüche 20 bis 28, wobei der Trockenkautschuk blattförmig ist.

30. Verfahren zur Herstellung eines Acrylkautschukballens gemäß Anspruch 29, wobei das Pressen des trockenen Kautschuks das Laminieren des blattförmigen trockenen Kautschuks umfasst.

31. Eine Gummimischung, die durch Mischen des Acrylkautschukballens gemäß einem der Ansprüche 1 bis 19 mit einem Füllstoff und einem Vernetzungsmittel erhalten wird.

32. Verfahren zur Herstellung einer Gummimischung, **dadurch gekennzeichnet, dass** der Acrylkautschukballen gemäß einem der Ansprüche 1 bis 19 mit einem Füllstoff und einem Vernetzungsmittel unter Verwendung eines Mischers gemischt wird.

33. Ein vernetztes Gummiprodukt, das durch Vernetzen der Gummimischung gemäß Anspruch 31 erhalten wird.

**Revendications**

1. Balle en caoutchouc acrylique, comprenant un caoutchouc acrylique contenant principalement un ester d'acide (méth)acrylique ayant un poids moléculaire moyen en poids (Mw) de 1 000 000 à 5 000 000 et un rapport (Mz/Mw) entre un poids moléculaire moyen Z (Mz) et un poids moléculaire moyen en poids (Mw) de 1,3 ou plus,

dans laquelle une quantité de gel insoluble dans la méthyléthylcétone est de 50 % en poids ou moins et dans laquelle la quantité de gel insoluble dans la méthyléthylcétone a été déterminée selon le procédé décrit dans le paragraphe [292] de la description.

2. Balle en caoutchouc acrylique selon la revendication 1, dans laquelle la quantité de gel insoluble dans la méthyléthylcétone est de 20 % en poids ou moins.

3. Balle en caoutchouc acrylique selon la revendication 1 ou 2, dans laquelle les 20 valeurs de la quantité de gel insoluble dans la méthyléthylcétone de la balle en caoutchouc acrylique mesurée en 20 points arbitraires se trouvent entre (valeur moyenne -5) et (valeur moyenne +5) % en poids.

4. Balle en caoutchouc acrylique selon l'une quelconque des revendications 1 à 3, dans laquelle une viscosité complexe ($[\eta]$ 60°C) à 60°C est de 15 000 Pa*s ou moins, et dans laquelle la viscosité complexe a été déterminée selon le procédé décrit dans le paragraphe [299] de la description.

5. Balle en caoutchouc acrylique selon l'une quelconque des revendications 1 à 4, dans laquelle un rapport ($[\eta]$ 100°C/$[\eta]$ 60°C) entre une viscosité complexe ($[\eta]$ 100°C) à 100°C et une viscosité complexe ($[\eta]$ 60°C) à 60°C est de 0,5 ou plus.

6. Balle en caoutchouc acrylique selon l'une quelconque des revendications 1 à 5, dans laquelle un rapport ($[\eta]$ 100°C/$[\eta]$ 60°C) entre une viscosité complexe ($[\eta]$ 100°C) à 100°C et une viscosité complexe ($[\eta]$ 60°C) à 60°C est de 0,8 ou plus.

7. Balle en caoutchouc acrylique selon l'une quelconque des revendications 1 à 6, dans laquelle une gravité spécifique est comprise entre 0,7 et 1,5 et dans laquelle la gravité spécifique a été mesurée selon le procédé A de mesure de la densité du caoutchouc réticulé de JIS K6268.

8. Balle en caoutchouc acrylique selon l'une quelconque des revendications 1 à 7, dans laquelle une gravité spécifique est comprise entre 0,8 et 1,4.

9. Balle en caoutchouc acrylique selon l'une quelconque des revendications 1 à 8, dans laquelle un pH est de 6 ou moins.

10. Balle en caoutchouc acrylique selon l'une quelconque des revendications 1 à 9, dans laquelle une teneur en cendres est de 0,3 % en poids ou moins, et dans laquelle la teneur en cendres a été mesurée selon le procédé de JIS K6228 A.

11. Balle en caoutchouc acrylique selon l'une quelconque des revendications 1 à 10, dans laquelle une teneur en au moins un élément choisi parmi le groupe consistant en du sodium, du soufre, de calcium, du magnésium et du phosphore dans des cendres est de 70 % en poids ou plus, et dans laquelle la teneur en cendres a été déterminée selon le procédé décrit dans le paragraphe [291] de la description.

12. Balle en caoutchouc acrylique selon l'une quelconque des revendications 1 à 11, dans laquelle une teneur en eau est inférieure à 1 % en poids et dans laquelle la teneur en eau a été mesurée selon JIS K62381-1 : procédé (de mesure de la teneur en substances à l'état gazeux) Ovent A.

13. Balle en caoutchouc acrylique selon l'une quelconque des revendications 1 à 12, dans laquelle une viscosité de Mooney (ML1+4100°C) de la balle en caoutchouc acrylique est comprise entre 10 et 150, et dans laquelle la viscosité de Mooney (ML1+4, 100°C) a été mesurée selon le procédé de test physique de caoutchouc non réticulé de JIS K6300.

14. Balle en caoutchouc acrylique selon l'une quelconque des revendications 1 à 13, dans laquelle le caoutchouc acrylique est polymérisé en émulsion à l'aide d'un sel d'ester de phosphate ou d'un sel d'ester de sulfate en guise d'émulsifiant.

15. Balle en caoutchouc acrylique selon la revendication 14, dans laquelle le liquide de polymérisation polymérisé en émulsion est coagulé à l'aide d'un sel de métal alcalin ou d'un sel de métal du groupe 2 du tableau périodique en guise de liquide de coagulation et séché.

16. Balle en caoutchouc acrylique selon l'une quelconque des revendications 1 à 15, dans laquelle le caoutchouc acrylique est malaxé à l'état fondu et séché après coagulation.

17. Balle en caoutchouc acrylique selon la revendication 16, dans laquelle le malaxage à l'état fondu et le séchage sont effectués dans un état sensiblement exempt d'eau.

18. Balle en caoutchouc acrylique selon la revendication 16 ou 17, dans laquelle le malaxage à l'état fondu et le séchage sont effectués à une pression réduite.

19. Balle en caoutchouc acrylique selon l'une quelconque des revendications 16 à 18, dans laquelle le caoutchouc acrylique est refroidi à une vitesse de refroidissement de 50°C/h ou plus après le malaxage à l'état fondu et le séchage.

20. Procédé de fabrication d'une balle en caoutchouc acrylique selon l'une quelconque des revendications 1 à 13, le procédé comprenant :

   un processus de polymérisation en émulsion destiné à émulsifier un composant monomère principalement composé d'un ester d'acide (méth)acrylique avec de l'eau et un émulsifiant, et à polymériser en émulsion le composant monomère émulsifié en présence d'un catalyseur de polymérisation à un taux de conversion de polymérisation de 90 % en poids ou plus afin d'obtenir un liquide de polymérisation en émulsion ;
   un processus de coagulation destiné à mettre en contact le liquide de polymérisation en émulsion obtenu avec un liquide coagulant afin de générer des copeaux aqueux ;
   un processus de lavage destiné à laver les copeaux aqueux ;
   un processus de séchage destiné à sécher les copeaux aqueux lavés jusqu'à une teneur en eau inférieure à 1 % en poids puis à extruder le caoutchouc sec ;
   et un processus de mise en balles destiné à mettre en balles le caoutchouc sec extrudé ;
   dans lequel le processus de séchage est effectué à l'aide d'une extrudeuse à vis.

21. Procédé de fabrication d'une balle en caoutchouc acrylique selon la revendication 20, dans lequel un processus de déshydratation destiné à extraire l'eau des copeaux aqueux est en outre prévu.

22. Procédé de fabrication d'une balle en caoutchouc acrylique selon la revendication 21, dans lequel les copeaux aqueux sont déshydratés jusqu'à une teneur en eau de 1 à 40 % en poids.

23. Procédé de fabrication d'une balle en caoutchouc acrylique selon la revendication 21 ou 22, dans lequel le processus de déshydratation et le processus de séchage sont effectués à l'aide d'une extrudeuse à vis équipée d'un tambour de déshydratation ayant une fente de déshydratation, d'un tambour de séchage à pression réduite, et d'une filière à l'extrémité, afin de déshydrater les copeaux aqueux dans le tambour de déshydratation jusqu'à une teneur en eau de 1 à 40 % en poids, puis de sécher les copeaux aqueux dans le tambour de séchage jusqu'à une teneur en eau inférieure à 1 % en poids, puis d'extruder un caoutchouc sec à partir de la filière.

24. Procédé de fabrication d'une balle en caoutchouc acrylique selon l'une quelconque des revendications 20 à 23, dans lequel une température des copeaux aqueux chargés dans l'extrudeuse à vis est de 40°C ou plus.

25. Procédé de fabrication d'une balle en caoutchouc acrylique selon l'une quelconque des revendications 20 à 24, dans lequel une température d'une section de tambour de séchage de l'extrudeuse à vis est comprise entre 100 et 250°C.

26. Procédé de fabrication d'une balle en caoutchouc acrylique selon l'une quelconque des revendications 20 à 25, dans lequel un degré de réduction de pression d'une section de tambour de séchage de l'extrudeuse à vis est compris entre 1 et 50 kPa.

27. Procédé de fabrication d'une balle en caoutchouc acrylique selon l'une quelconque des revendications 20 à 26, dans lequel une pression de résine d'une partie de filière de l'extrudeuse à vis est comprise entre 0,1 et 10 MPa.

28. Procédé de fabrication d'une balle en caoutchouc acrylique selon l'une quelconque des revendications 20 à 27, dans lequel un rapport (Q/N) entre une vitesse d'extrusion (Q) et un nombre de tours de l'extrudeuse à vis est compris entre 1 et 20.

29. Procédé de fabrication d'une balle en caoutchouc acrylique selon l'une quelconque des revendications 20 à 28, dans lequel le caoutchouc sec est formé en plaques.

**30.** Procédé de fabrication d'une balle en caoutchouc acrylique selon la revendication 29, dans lequel la mise en balles du caoutchouc sec consiste à stratifier le caoutchouc sec formé en plaques.

**31.** Mélange de caoutchouc obtenu en mélangeant la balle en caoutchouc acrylique selon l'une quelconque des revendications 1 à 19 avec une charge et un agent de réticulation.

**32.** Procédé de fabrication d'un mélange de caoutchouc **caractérisé en ce que** la balle en caoutchouc acrylique selon l'une quelconque des revendications 1 à 19 est mélangée avec une charge et un agent de réticulation à l'aide d'un mélangeur.

**33.** Produit réticulé en caoutchouc obtenu en réticulant le mélange de caoutchouc selon la revendication 31.

FIG.1

FIG.2

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006328239 A
- WO 2018116828 A
- JP 3599962 B
- WO 2018143101 A
- WO 2019087876 A1